## Europäisches Patentamt

(19) **European Patent Office**

**Office européen des brevets**

(11) Veröffentlichungsnummer: **0 258 344**
**B1**

(12) **EUROPÄISCHE PATENTSCHRIFT**

(45) Veröffentlichungstag der Patentschrift: **23.01.91**

(51) Int. Cl.⁵: **H 01 F 5/00, H 01 G 1/16**

(21) Anmeldenummer: **87901434.8**

(22) Anmeldetag: **13.02.87**

(86) Internationale Anmeldenummer:
**PCT/EP87/00072**

(87) Internationale Veröffentlichungsnummer:
**WO 87/05147 27.08.87 Gazette 87/19**

(60) Teilanmeldung 90100460.6 eingereicht am
**13/02/87.**

(54) **ELEKTRISCHES BAUELEMENT MIT INDUKTIVEN UND KAPAZITIVEN EIGENSCHAFTEN.**

(30) Priorität: **14.02.86 DE 3604579**
**26.08.86 DE 3628988**

(43) Veröffentlichungstag der Anmeldung:
**09.03.88 Patentblatt 88/10**

(45) Bekanntmachung des Hinweises auf die
Patenterteilung:
**23.01.91 Patentblatt 91/04**

(84) Benannte Vertragsstaaten:
**AT BE CH DE FR GB IT LI LU NL SE**

(56) Entgegenhaltungen:
**DE-A-1 538 146**
**DE-A-3 024 343**
**FR-A-1 582 185**
**US-A-1 460 390**
**US-A-2 515 676**
**US-A-2 817 066**
**US-A-3 202 592**
**US-A-3 260 977**
**US-A-3 638 155**

(73) Patentinhaber: **Lungu, Cornelius**
**Rossbühlstrasse 11**
**D-7582 Bühlertal (DE)**

(72) Erfinder: **Lungu, Cornelius**
**Rossbühlstrasse 11**
**D-7582 Bühlertal (DE)**

(74) Vertreter: **Patentanwälte Kirschner & Grosse**
**Forstenrieder Allee 59**
**D-8000 München 71 (DE)**

Courier Press, Leamington Spa, England.

## Beschreibung

Die Erfindung bezieht sich auf ein elektrisches Bauelement sowie elektrische Schaltungen unter Verwendung desselben.

Ein elektrisches Bauelement mit induktiven und kapazitiven Eigenschaften ist aus der DE—A—2 035 368 bekannt. Bei diesem Bauelement sind zwei voneinander elektrisch isolierte Leiter spulenförmig in Windungen und Wicklungslagen aufgewickelt, wobei zwischen diesen Leitern ein Dielektrikum angeordnet ist. Die Leiter sind zwei dünne runde Wickeldrähte, die mit einer Isolierung, z.B. einer Lackschicht, überzogen und bifilar gewickelt sind. Die Isolierung dient als Dielektrikum. Zur Bildung eines magnetischen Feldes werden Ströme durch das Bauelement ausgenutzt, die kapazitiven Ursprungs sind, wobei die Kapazität zwischen den Drahtwindungen der Wicklung entsteht.

Aus der US—A—2 817 066 ist ein elektrischer Hochleistungs- und Hochspannungstransformator bekannt, der ohne Gehäuse und Ölfüllung ein Gewicht von einigen Tonnen aufweist und rein induktiv funktioniert. Ein kapazitiver Stromanteil spielt praktisch keine Rolle, was sich darin zeigt, daß die Kontaktierung des Außenleiters und dadurch die wirksame Kapazität nicht am Hauptstromkreis angeschlossen ist.

Aus der DE—A—1 538 146 ist ein Transformator, insbesondere ein Impulsübertrager bekannt, der mehrere Wicklungen aufweist, wozu koaxiale Leiter verwendet werden. Bei der bekannten Anordnung ist das elektrische Feld zwischen den Leitern jeweils radial-symmetrisch ausgebildet, so daß eine Kraftlinienhäufung an einem Teil der Oberfläche der verschiedenen Leiter vermeiden wird.

Aus der FR—A—1 582 185 ist ein elektrisches Bauelement gemäß den Oberbegriffen von Anspruch 1 bzw. 6 bekannt, bei dem ebenfalls eine bifilare Wicklung vorgesehen ist, die eine induktive und eine kapazitive Eigenschaft aufweist. Eine Stromquelle ist an beiden Enden des ersten Leiters der bifilaren Wicklung angeschlossen, während der parallel oder konzentrisch hierzu angeordnete zweite Leiter nicht angeschlossen ist. Durch die bifilare Wicklung soll eine verminderte Selbstinduktion bei einer Unterbrechung des Stroms erreicht werden und außerdem soll eine entstehende Spannung durch die Kapazität zwischen beiden Drähten auf ein Maß begrenzt werden, bei dem zwischen den angeschlossen en Kontakten kein Lichtbogen auftritt. Dieses bekannte Bauelement ist für große Ströme ausgelegt und weist dicke Drähte sowie eine dicke Isolierschicht auf. Das Bauelement weist keine kleine Baugröße auf, und die erreichbaren Kapazitätswerte sind gering.

Aus der US—A—3 260 977 ist ein elektrisches Bauelement bekannt, das eine Wicklung aufweist, bei der zwei koaxiale Leiter, die voneinander isoliert sind, verwendet werden. Die Wicklung ist an bestimmten Abständen kontaktiert und an den Kontakten mit einer elektrischen Schaltung verbunden. Die Abgriffe dienen dazu, Teilspannung an einem Transformator abzugreifen.

Der Erfindung liegt die Aufgabe zugrunde, ein elektrisches Bauelement der in Rede stehenden Art anzugeben, das einfach herzustellen ist, gute elektrische Eigenschaften aufweist und trotz kleiner Baugröße erhebliche Mengen Energie kapazitiven Ursprungs speichern kann. Außerdem sollen Wege aufgezeigt werden, wie man solche gewickelten elektrischen Bauelmente einsetzt, um bisherige Kombinationen aus Spule und Kondensator zu ersetzen bzw. Bauteile mit neuen Eigenschaften zu schaffen.

Gemäß der Erfindung wird die Aufgabe durch die im Kennzeichen der Patentansprüche 1 und 6 angegebenen Merkmale gelöst. Weiterbildungen des Bauelements und vorteilhafte Verschaltungen sind in den Unteransprüchen angegeben.

Der Außenleiter ist als eine dünne, möglichst gleichmäßige Schicht ausgebildet, z.B. eine Metallisierung, die mit Hilfe bekannter physikalischer oder chemischer Verfahren, wie Aufdampfen, Kathodenzerstäubung, chemische Abscheidung, auf die dielektrische Schicht aufgebracht ist.

Der Wickeldraht ist in allen Richtungen gleichermaßen biegbar und bis zu sehr kleinen Abmessungen mit Durchmessern im Bereich von 0,01 Millimeter realisierbar. Für größere, insbesondere rotationssymmetrische Wicklungen kann man zur Erzielung größerer Füllfaktoren auch eine rechteckige Ausführungsform einsetzen.

Aus solchen Wickeldrähten kann das elektrische Bauelement mit herkömmlichen Wickelverfahren hergestellt werden. Bei etwa gleichen Dimensionen können gegenüber den bekannten bifilar gewickelten elektrischen Bauelementen um etwa das 15- bis 20-fache höhere Kapazitätswerte erreicht werden. Lufträume zwischen den beiden Leitern treten nicht auf, so daß Glimmentladungen unterbunden werden. Außerdem kann der Wickeldraht selbstheilend ausgebildet sein, so daß etwaige Durchschläge zwischen den Leitern keine Isolationsschäden hervorrufen.

Der Außenleiter, d.h. die Metallisierung, dient allen Windungen des Kernleiters als gemeinsame Kondensatorelektrode. Die Metallisierung jeder Windung ist hierzu elektrisch mit einer Sammelkontaktierung verbunden.

Vorzugsweise wird ein runder Wickeldraht aus einem runden Kernleiter, einem diesen umgebenden Dielektrikum und einem das Dielektrikum umhüllenden Außenleiter verwendet.

Das elektrische Bauelement gemäß der Erfindung kann auf vielfältige Weise angewendet werden und ersetzt eine Vielzahl von herkömmlichen Spule-Kondensator-Kombinationen.

Mit dem elektrischen Bauelement können durch die Schaffung kapazitiver Eigenschaften innerhalb eine Induktivität Kondensatoren und Verbindungselemente zwischen Kondensatoren und Induktivitäten eingespart werden. Außerdem wird gegenüber herkömmlichen Bauelementen Material eingespart. Das Bauelement gemäß der Erfindung ist in hohem Maße miniaturisierbar. Darüber hinaus bringt der Einsatz solcher Bauelemente als Schwingkreis neue Eigenschaften, so z.B. die Frequenzanpassung bis zum Verhältnis 2:1 allein über eine Widerstandsänderung.

Ausführungs- und Anwendungsbeispiele der Erfindung werden nun anhand der Zeichnungen näher erläutert. Es zeigen:

Fig. 1 einen Querschnitt durch einen Wickeldraht füc ein Bauelement gemäß der Erfindung;

Fig. 2 eine perspektivische Ansicht eines spulenförmig gewickelten elektrischen Bauelementes gemäß der Erfindung;

Fig. 3 eine perspektivische Ansicht eines Bauelementes gemäß der Erfindung zur Erläuterung des Wickelvorgangs;

Fig. 4 einen Querschnitt durch einen modifizierten Wickeldraht;

Fig. 5 einen Querschnitt durch einen Teil eines elektrischen Bauelementes gemäß der Erfindung mit einer weiteren Ausführungsform des Wickeldrahtes;

Fig. 6a, b Ersatzschaltbilder eines Bauelementes gemäß der Erfindung;

Fig. 7a bis e eine schematisch auseinandergezogene Darstellung einer Wicklung eines auch als Schwingkreis einzusetzenden Bauelementes gemäß der Erfindung sowie Diagramme zur Erläuterung der Wirkungsweise;

Fig. 8a bis c ein Ersatzschaltbild eines weiteren Bauelementes mit Diagrammen zur Erläuterung der Wirkungsweise;

Fig. 9 bis d ein als Relais verwendetes Bauelement gemäß der Erfindung sowie Ersatzschaltbilder hierzu;

Fig. 10 bis 21 jeweils Ersatzschaltbilder für weitere Ausführungsformen von elektrischen Bauelementen gemäß der Erfindung.

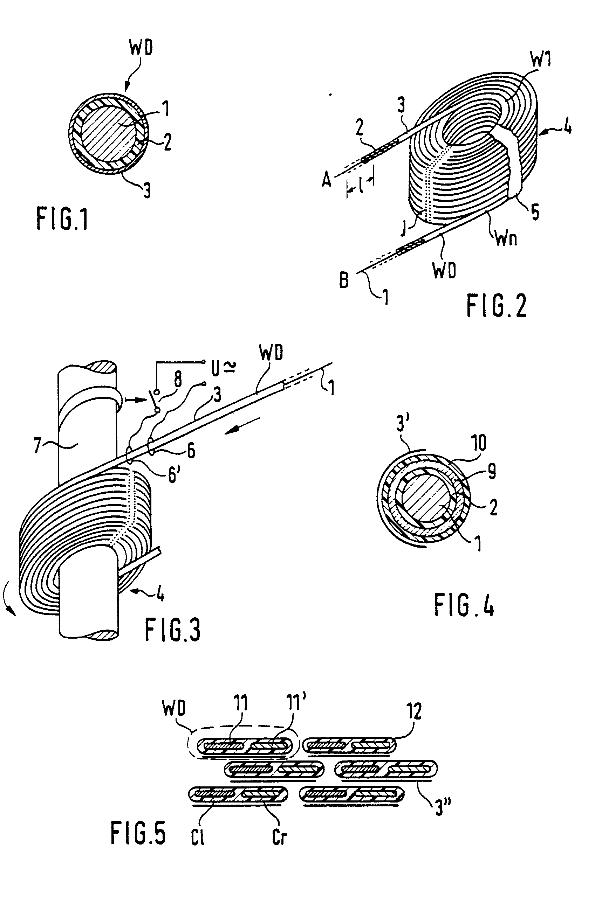

Ein Wickeldraht WD weist nach Fig. 1 einen üblichen Runddraht aus z.B. Kupfer, Aluminium usw. als Kernleiter 1 auf, der eine gleichmäßige und lückenlose konzentrische Isolation 2 trägt. Diese Isolation ist möglichst dünn und kann einschichtig oder mehrschichtig, aus gleichen oder verschiedenartigen Lagen bestehen, um für einen gegebene dielektrische Festigkeit eine möglichst hohe dielektrische Konstante aufzuweisen. Für die Ausführung der Isolation kommen bekannte Verfahren wie Lackieren, Pulverlackieren, Umspinnen, Anodisieren usw. infrage.

Auf diese dielektrische Isolation 2 wird eine dünne möglichst gleichmäßige Metallisierungsschicht als Außenleiter 3 aufgetragen. Der kapazitive Wickeldraht WD kann somit als beliebig langer dünner Drahtkondensator mit zwei konzentrischen Elektroden und einem dazwischenliegenden Dielektrikun bezeichnet werden. Die axiale elektrische Leitfähigkeit des Kernleiters 1 ist wesentlich höher als die Leitfähigkeit des Außenleiters bzw. der Metallisierung 3. Zweck dieser Ausgestaltung ist es, Kurzschluß-Windungswirkungen auf ein Mindestmaß zu reduzieren angesichts der Tatsache, daß infolge eines üblichen Wickelvorganges die sich berühren Außenmetallisierungen 3 benachbarter Windungen und Wickellagen geschlossene Kurzschlußwindungen darstellen.

Nach Figur 2 besteht eine mit dem kapazitiven Wickeldraht WD gemäß Figur 1 ausgeführte Spule 4 aus einem zusammenhängenden Wickel mehrerer (n) aneinanderliegender Windungen w1 bis w n. Die Metallisierung 3 der sich berührenden Windungen bildet also einen geschlossenen Kreis, und an diesem wird eine elektrische Sammelkontaktierung 5 angebracht, die aus zwischen den Windungen eingelegten, dünnen Metallfolien besteht oder in Form eines aufgespritzten metallischen Streifens ausgeführt ist.

Eine einfache Art die Sammelkontaktierung 5 durchzuführen ist es, die Wände eines den Wickel umgebenden Spulentragkörpers in einer Weise mit Metall zu beschichten, die Kurzschlußströme verhindert und diese Beschichtung als elektrischen Anschluß zu benutzen.

Um insbesondere bei niedrigen Spannungen ausreichend hohe Längenkapazitätswerte zu erreichen, kann die Isolation 2 aus einer elektrochemisch erzeugten Formierschicht bestehen, wie bei Elektrolytkondensatoren üblich. In diesem Fall besteht der Kernleiter 1 aus Aluminium oder weist eine geschlossene Aluminiumschicht auf, die anodisiert werden kann. Statt der Metallisierung 3 wird der Kernleiter 1 samt Aluminiumoxidschicht 2 von einem mit flüssigem oder festem Elektrolyt getränkten Abstandshalter umgeben. Dessen elektrische Leitfähigkeit ist gering, so daß die Kurzschlußwindungswirkung schwach ist. Wenn der Kernleiter 1 als Anode fungiert, wird die elektrisch angeschlossene Kathode von zwischen den Windungen (Lagen) des vom Abstandshalter umgebenen, isolierten Kernleiters 1 und eingelegten Aluminiumstreifen gebildet, die der Sammelkontaktierung 5 in der Funktion ähnlich sind. Bei Wicklungen mit flüssigem Elektrolyt (ähnlich üblichen Elektrolytkondensatoren) kann der Abstandshalter z.B. aus einer Umspinnung aus Baumwolle oder saugfähigem Papier bestehen, die erst nach dem Wickeln der Spule mit Elektrolyt getränkt wird. Die als Sammelkontaktierung 5 z.B. benutzten Aluminiumstreifen können in direktem Kontakt zum Spulentragkörper stehen, der z.B. ebenfalls aus Aluminium gefertigt ist. Es besteht die prinzipielle Möglichkeit, auch temperaturbeständigere Wicklungen dieser Art mit festem Elektrolyten in der Art trockener Elektrolytkondensatoren zu bauen. Dabei wird ein aus Glasfasern bestehender Abstandshalter von Anfang an mit einem festen Elektrolyten z.B. $MnO_2$ versetzt. Die weiteren Fertigungsschritte der Spule ähneln denen eines trockenen Elektrolytkondensators. Der Einfachheit halber werden im Laufe der Beschreibung nur die Begriffe Isolation 2, Metallisierung 3 und Sammelkontaktierung 5 erwähnt, wobei man sinngemäß auch eine Durchführung mit diesen Elektrolytkondensatortechniken verstehen kann.

Eine Änderung des magnetischen Flusses φ der Spule 4 bewirkt, daß in den Kernleiterwindungen Spannungen $U_w = d\phi/dt$ induziert werden, die entsprechend der Windungszahl sich addieren, so daß zwischen Anfang A und Ende B des Kernleiters 1 eine Spannung $U = nU_w$ entsteht. Die gleiche Windungsspannung $U_w$ entsteht auch in der elektrisch zu einem Kreis geschlossenen Metallisierung 3 des Wickeldrahtes. Dies könnte zu nachteiligen Kurzschlußströmen führen.

Für praktische Zwecke bei Netzfrequenzen können diese Kurzschlußströme durch eine dünn aufgetragene Metallisierung 3 kleingehalten werden, so daß deren Wirkung zu vernachlässigen ist. Für höhere Frequenzen ist es zweckmäßig, die Metallisierung 3 gezielt auf einem beliebigen Querschnitt I der Spule 4 zu unterbrechen, wodurch die Kurzschlußwirkung aufgehoben wird. Hierzu wird z.B. die dünne Metallisierung 3 durch eine elektrische Entladung örtlich entfernt. Dieses "Ausbrennen" der Metallisierung 3 kann während des Wicklungsvorganges geschehen, wenn der Wickeldraht vor dem Aufspulen, siehe Figur 3, zwischen zwei ringförmigen Elektroden 6, 6' geführt ist. Diese Elektroden, die auch in der Form von Schleifbürsten oder Kontaktrollen ausgeführt werden können, sind ständig in Kontakt mit der Metallisierung 3 des kapazitiven Wickeldrahtes nach Figur 1.

Wird nun kurzzeitig am Anfang jeder Umdrehung der Welle 7 der Wickelmaschine an diese Elektroden eine geeignete Spannung gelegt, z.B. über einen von der Welle 7 gesteuerten Schalter 8, so führt diese zu der örtlichen Zerstörung der Metallisierung 3 durch Wärme bzw. durch Entladungseinwirkung. Wichtig ist dabei, die elektrische Entladung so zu steuern, daß die Isolation nicht beschädigt wird. Da diese metallisierungsfreien Abschnitte auf der Spule 4 sich in der gleichen Winkellage befinden, bewirken diese eine Unterbruchung des sonst geschlossenen Metallisierungsringes; dadurch werden Wirbelströme vermieden.

Mit ähnlichen elektrischen Entladungsverfahren ist es auch möglich, die Metallisierung des Wickeldrahtes auch am Anfang A bzw. am Ende B der Spule 4 nach Figur 2 auf einer bestimmten Länge 1 zu entfernen. Dadurch lassen sich Entladungen zwischen den abisolierten Spulenanschlüssen A und B (Figur 2) und der Metallisierung 3 vermeiden.

Eine andere Form eines kapazitiven Wickeldrahtes, die vorwiegend größeren Leiterquerschnitten vorbehalten bleibt ist in Figur 4 dargestellt. Ein Kernleiter 1 ist von einer lückenlosen Isolationsschicht 2 umgeben, die wiederum von einem Mantelleiter 9 umgeben ist. Aus fertigungstechnischen Gründen kann dieser Mantelleiter eine oder mehrere Längsspalten aufweisen. Der Mantelleiter 9 hat einen Stromdurchgangsquerschnitt, der gleich oder unterschiedlich ist gegenüber dem des Kernleiters 1. Eine äußere Isolationsschicht 10 umgibt den Mantelleiter 9 und verhindert, daß sich dieser über benachbarten Windungen kurzschließt. Die Leiter 1 bzw. 9 bestehen aus Metall, z.B. aus Aluminium oder Weichkupfer.

Die Eigenschaften der Isolation 2 ähneln denen eines Dielektrikums für einen Kondensator. Das Isolieren kann durch übliche Verfahren wie Lakkieren, Ummanteln, Umspinnen usw. ausgeführt werden.

Eine besondere Variante in der Ausführung der Isolation 2, die besonders Anwendungen bei niedrigerer Spannung zugute kommt, ist die dem Elektrolyt-Kondensator ähnliche Ausführung. Dafür wird auf dem Kernleiter 1 bzw. dem Mantelleiter 9 oder auf beiden eine anodische Formierschicht aus z.B. $Al_2O_3$ gebildet. Diese Leiter bestehen dann aus Aluminium oder weisen eine anodisierbare Aluminiumschicht auf, und zwischen diesen beiden Leitern wird ein mit flüsigem oder festem Elektrolyt gefüllter Abstandshalter angebracht, wie beim Elektrolytkondensator. Durch diese bekannten Verfahren wird eine erheblich größere Kapazität erreicht. An die Isolation 10 als Windungsisolation werden geringere elektrische, jedoch höhere mechanische Anforderungen gestellt. Sie muß verhindern, daß der dünne Mantelleiter 9 sich während des Wickelvorgangs verformt. Die Isolation 10 muß bei der Ausführungsform mit flüssigem Elektrolyten dessen Auslaufen verhindern. Diese Isolation 10 kann aus einer Lackschicht wie bei üblichen Wickeldrähten oder aus einer einfachen bzw. lackierten Umspinnung bestehen.

Ein Wickeldraht mit zwei unabhängig voneinander schaltbaren Kapazitäten entsteht durch die dünne Beschichtung (ähnlich wie unter Figur 1 beschrieben) des kapazitiven Wickeldrahtes nach Figur 4 mit einer Metallisierung 3', die den bisher beschriebenen Verbund konzentrisch umgibt. Zwischen dieser Metallisierung 3' (nur links der Symmetrieachse gezeichnet) und dem Mantelleiter 9 entsteht eine zusätzlich nutzbare Kapazität.

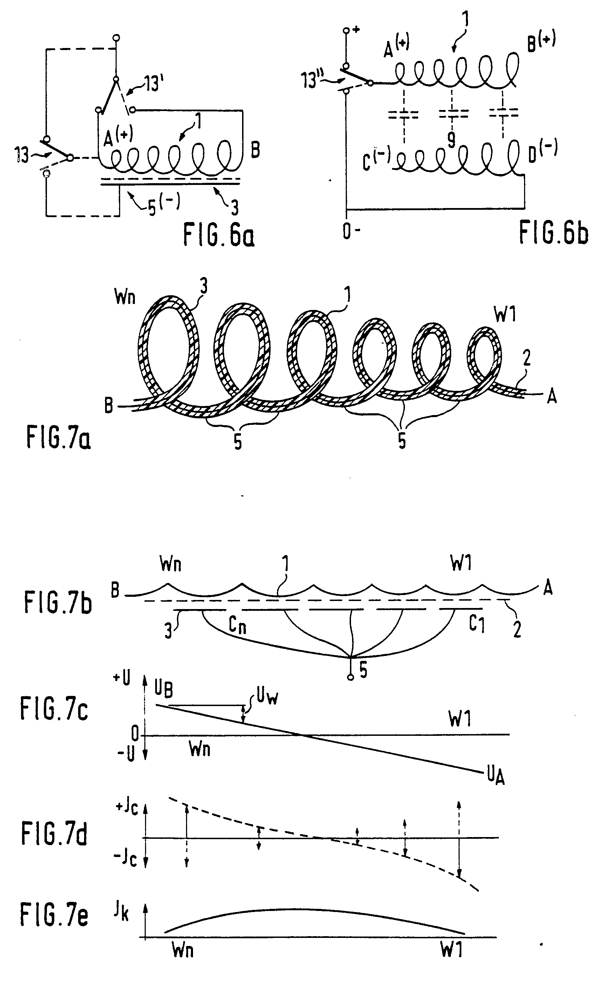

In Figur 5 ist ein Teil einer Wicklung eines elektrischen Bauelements mit einem bandförmigen Wickeldraht WD dargestellt. Er besteht aus zwei nebeneinanderliegenden elektrisch leitenden Flachdrähten 11 und 11', die in einer isolierenden als Dielektrikum dienenden Kunststoffmasse 12 eingebettet sind. Die Herstellung kann z.B. auf einfache Weise geschehen, wenn die zwei Leiter 11, 11' auf eine isolierende Folie geklebt und nachträglich von einer zweiten Isolierfolie abgedeckt werden. Auf einer Seite des so gebildeten Bandleiters ist eine dünne Metallisierung 3" aufgetragen. Wie aus der Kondensatortechnik bekannt, kann man Isolation und Metallisierung derart aufeinander abstimmen, daß Isolationsdurchschläge selbstheilend sind.

Innerhalb der Wicklung liegen die verschiedenen Lagen des bandförmigen Wickelleiters aufeinander, so daß die nichtmetallisierte Außenseite des Bandleiters der einen Lage mit fer Metallisierung 3" der darauffolgenden Lage in Kontakt steht. Die gemeinsame Metallisierung 3" bildet auf deren jeweiligen Breite mit den Leitern 11 und 11' Längenkapazitäten $C_1$ und $C_r$, die miteinander in Reihe gekoppelt sind. Dadurch liegt die Metallisierung 3" als gemeinsame Elektrode zweier in Reihe geschalteter Kondensatoren auf einem mittleren Potential gegenüber den Potentialen der Flachdrähte 11 bzw. 11'.

Zwischen den einzelnen Wicklungslagen des Bandleiters WD bilden sich zusätzliche Kapazitäten aus. Die Längenkapazität der so gebildeten Wicklung zwischen den Leitern 11 und 11' beträgt bei gleicher Stärke der Isolation auf der metallisierten bzw. nichtmetallisierten Seite ca. das Doppelte der Kapazität des nicht gewickelten Bandleiters.

Zwischen den leitenden Flachdrähten 11 und 11' wird ein Abstand vorgesehen, der ein Mehrfaches der Flächenisolationsstärke beträgt. Auf diese Weise wird erreicht, daß Durchschläge zwischen den Leitern vermieden werden. Eventuelle Durchschläge erfolgen dann nur zwischen einem der Leiter 11 bzw. 11' und der Metallisierung 3", die zwar an der Durchschlagsstelle zerstört wird, ohne daß jedoch gravierende Konsequenzen für die Wicklung auftreten. So ist es möglich, ähnlich wie bei einem selbstheilenden Kondensator, höhere Volumenkapazitätswerte durch höhere Beanspruchung des Dielektrikums zu erreichen.

Um die Darstellung der elektrischen Vorgänge in einer kapazitiv speichernden Spule zu vereinfachen, kann gezeigt werden, daß die physikalisch-elektrischen Vorgänge, die sich im Wicklungen abspielen, grundsätzlich identisch sind, auch wenn die Wicklungen mit verschiedenen kapazitiven Wickeldrähten ausgeführt sind. Die Unterschiede, die dabei auftreten, sind lediglich schaltungstechnischer Art. Eine Umsetzung der später beschriebenen Schaltungen für andere kapazitive Wickeldrahtarten ist daher aufgrund fachmännischen Wissens möglich.

Um die Wirkungsweise kapazitiv speichernder Spulen mit verschiednenen Kapazitivwickeldrahtarten zu erläutern, werden die grundsätzlichen Vorgänge Aufladen (bzw. Einspeisen eines Wekpselstromes), Entladen (bzw. Entnahme eines Wechselstromes) und Umpolen für die 2 grundsätzlichen Kapazitivwickeldrahtarten erläutert.

Figur 6a zeigt ausgestreckt eine Spule, die im Ursprungszustand wie die in Figur 2 aussieht, also mit dem metallisierten Wickeldraht nach Figur 1 gewickelt ist, wobei A der Anfang des Kernleiters 1 ist, B dessen Ende und 5 die allen Windungen gemeinsame Sammelkontaktierung 5 der Metallisierung 3.

Figur 6b zeigt eine Spule, die mit dem Wickeldraht nach Figur 4 oder 5 gewickelt ist, wo, verglichen mit Figure 6a, anstelle der Metallisierung 3 der Mantelleiter 9 bzw. der zweite Leiter (11' Figur 5) mit dem Anfang C bzw. dem Ende D vorhanden ist.

Nicht gezeichnet ist in Figur 6a, b der magnetische Kern der Spulen als Träger eines magnetischen Flusses.

Aufgeladen wird nach Figur 6a zwischen den Punkten $A^+$ und $5^-$, wobei der magnetisch wirksame Strom durch den Kernleiter 1 in Richtung AB fließt. Im Falle einer Entladung zwischen $A^+$ und $5^-$ fließt der Strom in umgekehrter Richtung von H nach A. Ein Umschaltkontakt 13 reicht für das Aufladen- Entladen. Ein Umpolen der magnetischen Vorgänge geschieht durch das Aufladen bzw. Entladen durch $B^+$ statt $A^+$, ohne die Polarität (−) der Sammelkontaktierung 5 zu ändern. Ein Umschaltkontakt 13' reicht daher für die Umpolung der Vorgänge.

Zwischen einer Aufladung bzw. Entladung über A und B besteht nicht nur bezüglich der Stromfließrichtung ein Unterschied. Der zeitliche Verlauf der Stromstärke ist auch unterschiedlich, weil die dem Kernleiter ende B benachbarten Windungen infolge ihres größeren Umfanges mehr Energie $(nF/m \cdot mU^2)$ speichern als die Anfangswindungen.

Nach Figur 6b muß ein magnetisch wirksamer Aufladevorgang zwischen den Punkten $A^+$ bzw. $D^-$ geschehen, damit durch den Kernleiter 1 bzw. Mantelleiter 9 der Strom in die gleiche Richtung (von A nach B bzw. C nach D) fließt. Man sieht, daß gegenüber Figur 6a der Strom durch eine doppelte Anzahl von Windungen fließt, so daß bei gleicher Stromstärkeverteilung ein doppelt so starkes Magnetfeld entsteht. Eine Entladung zwischen A und D über dem Umschalter 13" ruft gegenüber einer Aufladung entgegengesetzte Ströme (von H nach A bzw. D nach C) hervor, wodurch auch die magnetische Wirkung das andere Vorzeichen bekommt. Ein Umpolen des Aufladevorganges ist anders als unter Figur 6a möglich (ohne die Stromquelle umzupolen), wenn die Einspeisung über die Punkte $H^+$ bzw. $C^-$ erfolgt.

Dafür sind 2 Umschaltkontakte notwendig, und die magnetische Wirkung (vom Vorzeichen abgesehen) ist abweichend von dem Fall unter Figur 6a gleich wie bei der Einspeisung über $A^+$ bzw. $D^-$, wenn die Längenwiderstände des Kernleiters 1 und des Mantelleiters 9 gleich sind.

Wenn man diese schaltungstechnischen Gegebenheiten berücksichtigt, ist es also im Prinzip möglich, bei gleicher Kapazität und magnetisch effektiver Windungszahl kapazitiv speichernde Spulen mit dem Wickeldraht nach Figur 1 bzw. Figur 4 oder 5 zu bauen.

Bei gleichem Längenwiderstand des Kernleiters 1 bzw. des Mantelleiters 9 sind also statt 2n Windungen mit dem Wickeldraht nach Figure 1 nur n Windungen des Wickeldrahtes nach Figur 4 notwendig, wobei die Längenkapazität des letzteren doppelt so groß sein muß.

Der Wickeldraht nach Figur 4 (linke Querschnittshälfte) mit dem Kernleiter 1, dem Mantelleiter 9 und der Metallisierung 3' kann als Kombination der beiden vorhin betrachteten Fälle angenommen werden. Der kapazitive Strom im Mantelleiter 9 ist die Summe der kapazitiven Ströme, die zwischen diesen und dem Kernleiter 1, bzw. der Metallisierung 3' entstehen. Es ist jederzeit möglich, den Kernleiter 1, den Mantelleiter 9 oder dessen Äquivalente 11, 11' nach Figure 5, zusätzlich zum kapazitiven Strom mit einem rein induktiven Strom wie in einer herkömmlichen induktiven Wicklung zu belasten. Nach bekannten Regeln muß in diesem Fall der jeweilige Leiterquerschnitt ggr. vergrößert werden.

Zur einfacheren Analyse der elektromagnetischen Eigenschaften einer Spule 4 nach Fig. 2 wird diese in Fig. 7a mit losen Windungen dargestellt, bzw. in Fig. 7b symbolisch als Kondensator mit einer induktiv wirkenden Elektrode (Kernleiter 1). Zur Vereinfachung der Analyse werden die wichtigsten elektrischen Parameter als diskrete Größen jeweils in Bezug auf eine Windung betrachtet.

Nach Fig. 7, mit Bezug auf Fig. 1 und 2, erkennt man den Kernleiter 1, der am Anfang A, bzw. am Ende B, von der Isolation 2 (strichpunktiert gezeichnet) befreit ist. Die Metallisierung 3 ist auf jeder Windung (in Scheitellage Fig. 7a), wie bereits beschrieben, unterbrochen, jedoch steht die Metallisierung jeder Windung in elektrischem Kontakt mit der Sammelkontaktierung 5. Jede einzelne Windung (W1—Wn) kann also als Kondensator betrachtet werden, dessen Kapazität proportional zur jeweiligen Windungslänge ist und sich nach der Formel für konzentrische Leitungen berechnen läßt. Die Metallisierung 3 der einzelnen Windungen befindet sich über der Sammelkontaktierung 5 stets auf demselben Potential; die Potentiallage der einzelnen Windungen untereinander ist dagegen von der Änderung des magnetischen Flusses abhängig, der die Spule durchdringt.

Bei einer definierten Änderung des magnetischen Flusses entsteht zwischen Anfang A und Ende B des Kernleiters 1 ein Spannungsunterschied

$$U = \frac{d\phi}{dt},$$

der sich gleichmäßig auf alle Windungen verteilt, sodaß die Windungsspannung

$$U_w = \frac{U}{n}$$

beträgt (Fig. 7c).

Wenn die Spannung zwischen dem Kernleiter 1 und der Sammelkontaktierung 5 vor Beginn der Änderung des magnetischen Flusses $\phi$ gleich Null war, teilt sich die Spannung U gegenüber der Sammelkontaktierung 5 in eine negative Komponente am Kernleiteranfang A und in eine positive Komponente am Kernleiterende B. Dies ist auf die Windungskapazitäten zurückzuführen, die bei der Spannungsentstehung aufgeladen werden. Dieser Aufladung der einzelnen Windungskapazitäten liegen jeweils Aufladeströme zugrunde, die zwischen dem Kernleiter 1 und der Metallisierung 3 für den jeweiligen Windungsbereich filießen. Die Größe dieser Ströme ist also von der jeweiligen Windungskapazität $C_w$, bzw. vom Spannungspegel der jeweiligen Windung gegenüber der Sammelkontaktierung 5 abhängig. Im Bereich der positiven, bzw. der negativen Spannung, weisen diese Ströme entgegengesetzte Richtungen auf, und weil die Spule keine äußere Verbindung hat und kein Strom nach außen fließen kann, ist auch die Summe der positiven und negativen auf kapazitive Weise hervorgerufenen Ströme gleich null.

Weil die Sammelkontaktierung 5 eine gemeinsame Kondensatorelektrode darstellt, erfolgt der Ausgleich dieser Ströme über den Kernleiter 1, der im Bereich der Windung, der en Spannung gleich null ist, die maximale Strombelastung erreicht.

Der Verlauf der kapazitiven Ströme zwischen Kernleiter und Metallisierung der jeweiligen Windung ist in Figur 7d dargestellt, und die Strombelastung des Kernleiters 1 als Summe dieser Ströme ist in Figur 7e abgebildet. Disse Ströme wirken der Änderung der Spannung an den einzelnen Windungskapazitäten und dadurch einer Magnetflußänderung entgegen.

Gelangt die Magnetflußänderung zum Stillstand, so neigen jetzt die wie vorher beschrieben entstandenen positiven und negativen Ladungen der Windungskapazitäten $C_w$ sich gegenseitig über dem Kernleiter 1 zu neutralisieren.

Dies hat zur Folge, daß die in Figur 7d und 7e dargestellten Ströme ihre Richtung umkehren, so daß durch den Kernleiter 1 jetzt ein Strom in entgegengesetzter Richtung fließt, der erneut ein Magnetfeld hervorruft.

Die wechselseitige Auf- Entlandung der Windungskapazitäten einer Spule nach Figur 2 in Zusammenhang mit der antagonistischen Änderung des Magnetflusses bewirkt ähnlich wie in einem herkömmlichen Schwingkreis eine elektromagnetische Schwingung, die durch Widerstands- und Ummagnetisierungsverluste gedämpft wird.

Diese Schwingung kann durch eine schnelle Änderung des magnetischen Flusses angeregt werden und hat, solange der Sätigungsbereich eines magnetischen Kernes der Spule 4 nicht erreicht ist, einen sinusförmigen Verlauf. Durch synchronisierte Energiezufuhr von außen in Form von elektrischer oder magnetischer Energie kann in bekannter Weise die Dämpfung dieser Schwingung kompensiert werden, wodurch wie in einem herkömmlichen Schwingkreis technisch nutzbare Schwingungen konstanter Amplitude aufrecht erhalten werden. Die Frequenz dieser Schwingung läßt sich durch aufwendigere Berchnungsverfahren anahand bekannter Formeln ermitteln, wenn jeder Windung ihre charakteristischen Größen (R—L—C) als diskrete Mengen zugrunde gelegt werden. Als Näherungsverfahren für die Praxis kann man die Frequenz eines herkömmlichen Schwingkreises in Betracht ziehen, der die gleiche Kernreluktanz und Wicklungsparameter aufweist, wobei man eine äußerliche Kapazität einsetzt, die etwa genau so groß ist wie die gesamte Kapazität zwischen Kernleiter 1 und Sammelkontaktierung 5. Die Eigenschwingfrequenz der induktiv-kapazitiven Spule 4 nach Figur 2 ist in diesem Fall etwa 3 mal höher als die Eigenschwingfrequenz des herkömmlichen Schwingkreises.

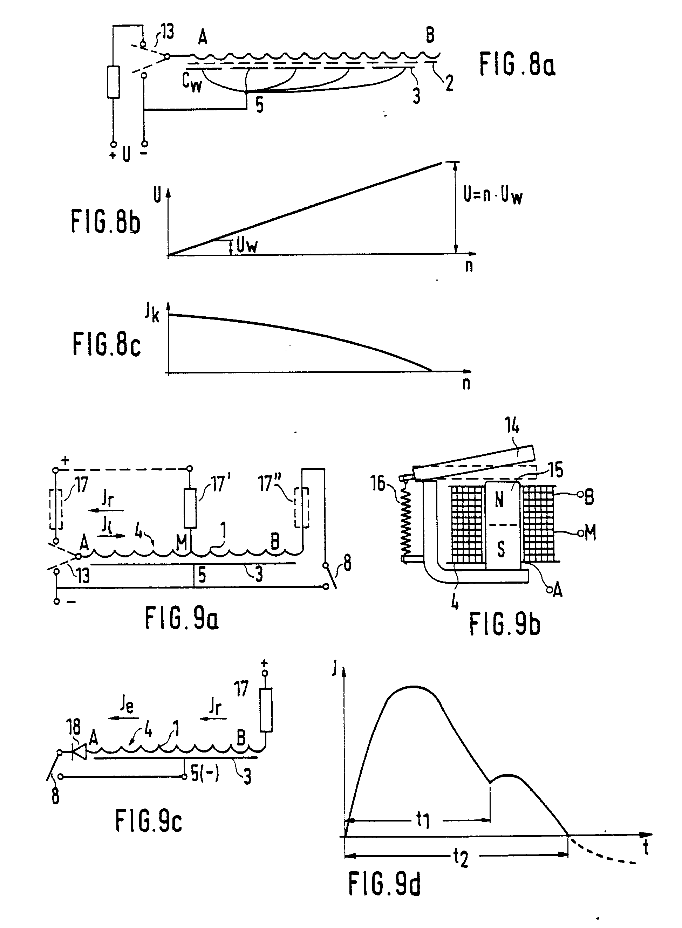

Eine einfache Möglichkeit, die Frequenz dieser Schwingung etwa um den Faktor 2 zu reduzieren, zeigt die Fig. 8. Dabei wird die Sammelkontaktierung 5 der Wickeldrahtmetallisierung 3 mit dem Anfang A oder dem Ende B des Kernleiters 1 mit Hilfe eines Umschalters 13 verbunden. Dadurch verlagert sich die Maximalspannung U als Summe der Windungsspannungen $U_w$ insgesamt zwischen der Sammelkontaktierung 5 und dem freien Ende des Kernleiters 1, wodurch alle Windungskapazitäten $C_w$ mit einer Spannung gleichen Zeichens und insgesamt betrachtet auf einen höheren Spannungspegel aufgeladen werden. Dadurch ist die kapazitive Energiespeicherungsfähigkeit der Wicklung größer, was die Zeitkonstante des Schwingkreises verlängert. Die Fig. 8b zeigt den Spannungsverlauf entlang des Kernleiters 1.

Ein solcher Schwingkreis kann nicht nur wie der vorher beschriebene durch eine Magnetflußänderung zum Schwingen angeregt werden, sondern auch durch die Aufladung und anschließende Entladung der Windungskapazitäten. Dafür wird nach Fig. 8a der Kernleiteranfang A über dem Umschalter 13 am Pluspol einer Spannungsquelle angeschlossen. Schaltet man nach Aufladung der Wicklung nun den Kernleiteranfang A an die Sammelkontakttierung 5 (=Minuspol) an, so entladen sich die Windungskapazitäten über dem Kernleiter 1 und rufen einen Strom hervor, der seinen Maximalwert am Anfang A des Kernleiters 1 erreicht (Stromverlauf entlang dem Kernleiter 1, in Fig. 8c dargestellt). Ähnlich wie im vorher beschriebenen Fall entsteht auch hier eine gedämpfte Schwingung, deren Frequenz etwa 1,5 mal höher liegt als die Frequenz eines herkömmlichen Schwingkreises mit gleichen Spulenparametern, bzw. gleicher Kapazität. Eine zwischen dem Kernleiter 1 und der Sammelkontaktierung 5 aufgebaute Spannung kann auch über das Ende B des Kernleiters 1 entladen werden. Es entsteht wie im vorliegenden Fall eine Schwingung, deren Frequenz bei technisch üblichen Spulenabmessungen etwas höher liegt als im vorherigen Fall. (Anschluß an A) Dies ist mit der umgekehrten Verteilung der Windungskapazitäten entlang der Entladungsstrecke über dem Kernleiter 1 zu erklären. Die Windungskapazitäten, die proportionall zu der Windungslänge sind, nehmen zwischen Kernleiteranfang A und Kernleiterende B zu. Gedämpft Schwingungen treten auf nicht nur im Falle einer Entladung, sondern auch im Falle einer Aufladung über dem Anfang A oder über dem Ende B des Kernleiters 1. Die Schwingungen weisen gleiche Frequenzen wie im Falle einer Entladung auf. Voraussetzung dafür ist die Einschaltung an eine Stromquelle mit ausreichend niedriger Impedanz. Die beschriebenen Anordnungen sind in vielfacher und vorteilhafter Weise technisch nutzbar. Eine Spule 4 nach Fig. 2, insbesondere mit magnetischem Kern, kann herkömmliche Schwingkreise ersetzen, ohne daß ein Kondensator notwendig ist.

Eine zusätzliche Eigenschaft der Schwingkreise, die wie beschrieben mit kapazitivem Wickeldraht hergestellt sind, ist die Tatsche, daß mit Hilfe eines variablen Widerstandes die Schwingfrequenz sich im Verhältnis 2:1 ändern läßt.

Regt man in einem Schwingkreis wie in Fig. 8 Resonanzschwingungen an, und vergrößert den Widerstand zwischen Kernleiteranfang A und Sammelkontaktierung 5 von O auf unendlich, so vergrößert sich die Schwingfrequenz auf 200% der ursprünglichen. Die Schwingungsanregung, Energieeinspeisung für den Dämpfungsausgleich, bzw. die Abnahme eines Schwingsignals, kann sowohl über den Kernleiter 1 (als rein induktive Wicklung betrachtet) als auch in bekannter Weise über eine zusätzliche induktive Wicklung erfolgen.

Ein wichtiges Einsatzgebiet für kapazitiv speichernde Wicklungen wie in Fig. 2 ist die Magnettechnik. Hier wird die Aufladung—Entladung solcher Wicklungen in mechanische Arbeit umgesetzt. Es kann theoretisch wie praktisch nachgewiesen werden, daß bei gleichem Drahtdurchmesser, Isolationseigenschaften und Gesamtwindungszahl die Kapazität einer nach dem Stande der Technik bifilar gewickelten Spule 15—20 mal niedriger ist als die Kapazität der entsprechenden Spule nach Fig. 2. Dadurch ist die mit einer solchen Spule erreichbare mechanische Arbeit wesentlich größer, was den technischen Einsatz rechtfertigt.

Fig. 9a stellt eine Spule 4 nach Fig. 2 in vereinfachter, schematischer Weise dar. Dem Kernleiter 1 mit dem Anfang A einer (induktivitätsmäßig gesehenen) Spulenmittenanzapfung M und dem Ende H steht in der Art der Platte eines Kondensators die Sammelkontaktierung 5 der Metallisierung 3 gegenüber. Die Spule dient nach Fig. 9b z.B. als Wicklung 4 eines bekannten bistabilen Klappenkermagnetsystems eines Relais. Der Klappanker 14 wird durch ein kurzes, starkes Magnetfeld vom Magnetkern 15 angezogen, wo er über Remanenzmagnetismus gegen die Wirkung einer Rückstellfeder 16 haftenbleiben kann. Durch entgegengesetzte, in der Regel schwächere Magnetfelder kann der Remanenzmagnetismus im Kern 15 gelöscht werden, wodurch der Klappanker 14 in seine äußere Stellung zurückkehrt. Eine Spulenanordnung nach Fig. 9a kannicn vielfältiger Weise bei geringstem Energieverbrauch die Magnetimpulse liefern, die zur Betätigung des Klappankers 14 dienen.

Eine erste Möglichkeit ist, die Plus- und Minuspole einer Stromquelle an den oberen Kontakt eines Umschalters 13 und an der Sammelkontaktierung 5 anzuschließen. Die Umschaltwippe des Schalters 13 ist mit dem Anfang A des Kernleiters 1 verbunden und der untere Kontakt mit der Sammelkontaktierung 5. Verbindet man den Kernleiter 1 mit dem Pluspol, so fließt ein Strom $I_1$ durch die Spule, was ein entsprechendes Magnetfeld zur Folge hat. Die Stärke dieses Magnetfeldes kann durch einen Widerstand 17 begrenzt werden, wenn beabsichtigt wird, dieses als Entmagnetisierungsfeld zu benutzen.

Der aus der Energiequelle entnommene Strom ist dann gering, genügt aber, um das Abheben des Klappankers 14 unter Einwirkung der Feder 13 einzuleiten. Verbindet man jetzt die kapazitiv aufgeladene Wicklung über dem Umschalter 13 mit dem Minuspol (5), so fließt durch die Wicklung ein Strom $I_r$ von rechts nach links. Dieser Strom bewirkt den Anzug des Klappankers 14 am Magnetkern 15 und dessen permanente Megnetisierung. Wenn es beabsichtigt ist, aus der Energiequelle extrem niedrige Ströme zu entnehmen, wird der Pluspol der Energiequelle über einen Widerstand 17' an der Mittelanzapfung M des Kernleiters 1 angeschlossen. Der Widerstand 17' ist so bemessen, daß die Wicklung zwischen 2 Entladungen sich ausreichend wieder aufladen kann. Für Relais und übliche Spannungspegel reichen üblicherweise dazu Widerstände im Megaohm-Bereich, so daß die entnommenen Ströme extrem niedrig sind und nach Aufladung der Spulenkapazität noch um Größenordnungen abnehmen. Die kapazitive Energie kann jetzt über dem Kernleiteranfang A oder Kernleiterende B zum Minuspol (5) mit Hilfe der Schalter 13 oder 8 entladen werden, wodurch entgegengesetzte Ströme $I_l$ oder $I_r$ entstehen. Mit Hilfe eines Widerstandes 17'' kann einer dieser Ströme soweit abgeschwächt werden, daß es zum Abheben des Klappankers 14 führt. Die stromstärkere Entladung über Kernleiteranfang A führt dementsprechend zum Anzug und anschließenden Festhalten des Klappankers 14. Die Schließung der Schalter 13 und 8 muß nur von kurzer Dauer sein, um ein Wiederaufladen der kapazitiven Wicklung zu gestatten. Es ist selbstverständlich, daß anstelle der mechanischen Schalter elektronische Schalteinrichtungen eingesetzt werden können. Auch wenn man beabsichtigt, anstelle eines bistabilen Magnetkreises einen monostabilen einzusetzen, ist eine kapazitiv speichernde Spule von Vorteil. Es wird ein Magnetkreis wie in Fig. 9b als Beispiel gegeben, wobei der Magnetkern 15 aus einem Material mit möglichst niedriger Remanenzinduktion besteht, sodaß der Klappanker 14 in stromlosem Zustand der Spule nicht haftenbleiben kann.

Nach Fig. 9c wird eine Schaltung ausgeführt, wobei der Kernleiter 1 durch einen Widerstand 17 mit Strom vorsorgt wird. Die Sammelkontaktierung 5 wird am Minuspol der Stromquelle angeschlossen. Der Anfang des Kernleiters 1 (A) kann über eine Gleichdichterdiode 18 und einen Schalter 8 mit dem Minuspol (5) verbunden werden. Der Widerstand 17 wird so gewählt, daß der durch den Kernleiter 1 zum Minuspol in stationärem Zustand fließende Strom der Klappanker 14 zuverlässig am Kern 15 angezogen halten kann, aber nicht imstande dazu ist, diesen anzuziehen. Dieser Strom und die dazugehörende Leistungsaufnahme sind bei üblichen Magnetsystemen beträchtlich niedriger als die Anzugsströme. In offenem Zustand des Schalters 8 lädt sich die Spule 4 bis zur Spannung U der Stromquelle auf. Schließt man nun den Schalter 8, so entlädt sich die kapazitiv gespeicherte Energie und verursacht einen Strom, der einen hohen Wert $I_e$ erreicht, der imstande dazu ist, den Klappanker 14 anzuziehen. Die Diode 18 verhindert, daß als Folge möglicher Stromschwingungen der Strom im Kernleiter 1 sich umkehrt. Einmal die Entladung beendet, fließ durch den Kernleiter 1, der jetzt wie eine herkömmliche induktive Wicklung wirkt, ein Haltestrom von geringerem Wert $I_r$. Durch Öffnung des

Schalters 8 wird dieser unterbrochen, der Klappanker 14 hebt ab, und die Spule wird wieder kapazitiv aufgeladen. Das im Anschluß an Fig. 9 bzw. beim Magnetkreis eines Relais Erwähnte gilt selbstverständlich auch für andere mono- oder bistabile Magnetkreisformen, die je nach Dimensionierung wesentlich größere Hubarbeit entwickeln können. Es ist also im Prinzip möglpch, eine kapazitiv speichernde Wicklung in fast allen Arten von Relais, Schaltmagneten, Schaltventilen, Magnetbremsen, Magnetisierungsvorrichtungen u.s.w. einzusetzen.

Um einen solchen Einsatz korrekt durchzuführen muß das Schwingkreisverhalten solcher Wicklungen im Zusammenhang mit dem Magnetsystem betrachtet werden. Als Folge der Tatsache, daß die meisten Magnetantriebsysteme massive Jochteile aus Metall aufweisen, deren Ummangnetisierungsverluste groß sind, ist die Dämpfung der Schwingungen in der Regel hoch. Es ist wünschenswert, die Induktivität und Kapazitätswerte kapazitiv speichernder Wicklungen so auszuwählen, daß die mechanische Ansprechzeit des Antriebssystems etwa 0,4—0,8 der Schwingungsdauer beträgt. Dies verhindert Schwingungen des Arbeitsankers und vereinfacht die elektrische Schaltung. Die theoretische Bestimmung der Schwingungsdauer eines Magnetkreises mit kapazitiv speichernder Wicklung, mit einem beweglichen Anker versehen, ist aufgrund der zeitlich sich zum Zeitpunkt der Hubarbeit verändernden Reluktanz schwierig. Diese Bestimmung muß jedoch nicht sehr genau sein und die experimentelle Ermittlung der Schwingungsdauer ist für den industriellen Einsatz geeignet. Dafür wird der funktionsfähige Magnetkreis samt anzutreibender Last als Prototyp des jeweiligen Gegenstandes (Magnetantrieb, Magnetventil, Relais, u.s.w.) aufgrund üblicher Verfahren gebaut mit einer herkömmlichen induktiven Wicklung für einen vorgegebenen Spannungspegel. Dieser Spannungspegel soll 20—80% niedriger sein als der Spannungspegel, an dem die später eingesetzte kapazitiv speichernde Wicklung arbeiten wird. Der höhere Spannungsüberschuß wird gewählt, wenn die Absicht besteht, ein schnelleres Ansprechen der Vorrichtung zu bewirken. Die mechanische, bzw. elektrische Bemessung der Wicklung erfolgt derart, damit später im Wickelraum eine kapazitiv speichernde Wicklung untergebracht werden kann, deren Kernleiter 1 ungefähr den gleichen ohmschen Widerstand hat. Gegenüber dem üblichen Wickeldraht weist der kapazitiv speichernde Wickeldraht nach Fig. 1 bei gleichem Längenwiderstand einen etwas größeren Außendurkhmesser auf. Es werden jetzt Kondensatoren bis zum oben erwähnten höheren Spannungspegel aufgeladen und über eine Gleichrichterdiode durch die Magnetwicklung entladen, bis die niedrigste Kapazität gefunden ist, die eine zuverlässige Funktion der Vorrichtung gewährleistet. Dieser Entladungsvorgang wird mit Hilfe eines Oszillographen aufgenommen, ggf. auch ohne die Diode, die eine Stromumkehr in der Wicklung verhindern soll. Das Oszillogramm weist üblicherweise einen zeitlichen Verlauf des Entladestromes, wie in Fig. 9d abgebildet auf. Die Zeitspanne $t_1$ stellt die mechanische Ansprechzeit der angetriebenen Vorrichtung dar. $T_2$ ist die Dauer der ersten positiven Entladeschwingung unter reellen Bedingungen (mit zeitlich veränderlicher Reluktanz des Magnetkreises als Folge der mechanischen Arbeit). Als Schwingungsdauer des Magnetsystems mit kapazitiv speichernder Wicklung wird nun eine Zeitspanne t gewählt, die zwischen $t_1$ und $t_2$ liegt. Um die Kapazität der Wicklung zu ermitteln, wird diese Zeitspanne um den Faktor 1,41 verlängert. Aufgrund der Formel $T = 2\pi\sqrt{LC}$ wird die zuvor ermittelte Kapazität um den Faktor 2 vergrößert. Die nachträglich eingebaute kapazitiv speichernde Wicklung wird für diese vergrößerte Kapazität bemessen. Wenn infolge der Wicklungsparameter bei vorgegebenem Wicklungswiderstand und vorhandenem kapazitiv speicherndem Wickeldraht sich ein zu hoher Kapazitätswert ergibt, kann man die Wicklung in einen kapazitiv speichernden Teil und in einen rein induktiven Teil aufteilen, sodaß der kapazitiv speichernde Teil sich über dem induktiven Teil entladen kann. Bei ungenügender Längenkapazität des Wickeldrahtes kann man mehrere parallel geschaltete gleichzeitig gewickelte dünnere Drähte gleicher Art verwenden Der zuvor ermittelte Kapazitätswert beinhaltet normalerweise einen Leistungsüberschuß.

Die Vorteile dieser Schaltungen sind die allgemein in der Impulstechnik bekannten, also hohe Energieeinsparungen (bis über 99%), erhöhte Leistungsfähigkeit und meistens vernachlässigbare Erwärmung der Spule. Gegenüber bekannten Impulstechniken haben energiespeichernde Wicklungen den Vorteil, daß hier die Impulslänge, bzw. Die Impulsstärke nicht von außen durch zusätzliche Bauelemente bestimmt werden muß, sondern alleine durch die Eigenschaften der Spule entsteht. Weil die Spule sich in sich selbst entlädt, sind mit Ausnahme eines mechanischen oder elektronischen Schalters keine äußeren Mittel notwendig. Der Schalter kann innerhalb eines metallischen Magnetgehäuses untergebracht werden in einer Weise, die leicht also explosionssicher oder störungsneutral gegenüber benachbarten empfindlichen elektronischen Bausteinen zu gestalten ist. Weil die Aufladeströme kapazitiv speichernder Spulen extrem niedrig-sein können, ist es auch leicht, die Zuleitungen zu diesen störungsneutral oder explosionssicher zu gestalten.

Aufgrund der kapazitiven Eigenschaften einer Spule 4 nach Fig. 2 sind zahlreiche Wechselstromanwendungen möglich. Diese betreffen insbesondere Hilfsphasenmotoren, Magnetantriebe, Blindleistungskompensation und Spannungsspitzenunterdrückung, Miniaturisierung von Magneten und Umwandlern.

Eine kapazitiv speichernde Spule, an Wechselstrom zwischen Kernleiter 1 und Sammelkontaktierung 5 angeschlossen, weist im Prinzip die Eigenschaften einer mit einem Kondensator in der Reihe geschalteten Induktivität. Der Strom, der durch den Kernleiter 1 fließt, und eine Wechselfeld hervorruft, ist kapazitiven Ursprungs und eilt der Spannung voraus. Der Strom als Summe aller kapazitiven Windungsströme ist wie nach Fig. 8c zum Kernleiterende B hin abnehmend; deswegen ist bei gleicher Induktivität und Kapazität das Wechselfeld einer kapazitiv speichernden Spule etwas schwächer als das einer gleichwertigen Spule in Reihe mit einem Kondensator geschaltet.

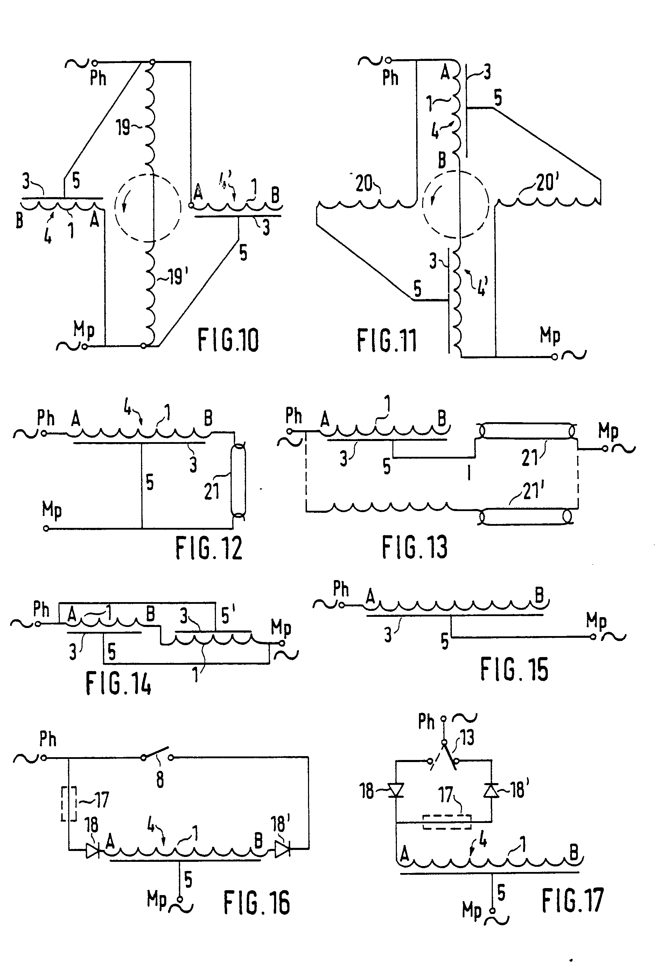

Wichtige Einsatzgebiete dieser Art von Schaltung sind neben magnetischen Netzspannungsstabilisatoren insbesondere Hilfsphasenmotoren, die ursprünglich als Betriebskondensatormotoren konzipiert waren. Fig. 10 stellt schematisch einen solchen Motor dar mit einer Hauptwicklung 19, 19', die ans Netz angeschlossen ist. Die Hilfsphasenwicklung dieses Motors, die ursprünglich mit dem Betriebskondensator in Reihe geschaltet war, wurde in Fig. 10 mit einer zweigeteilten kapazitiv speichernden Wicklung 4, 4' ausgestattet. Die Blindleistung eines Betriebskondensators nach der Formel $P_B = U_c^2 \times 2f \times C$ berechnet läßt sich im Falle einer kapazitiv speichernden Spule aufgrund des ungleichmäßigen Spannungspegels einzelner Windungen nicht direkt auf di gesamte Wicklungskapazität anwenden. Die benötigte Blindleistung ist hier die Summe einzelner Spannungsabhängig ermittelter Blindleistungsbeiträge aller Windungen oder Spulenabschnitte. Die zwischen dem Anfang des Kernleiters A und der Sammelkontaktierung 5 angelegte Netzspannung U steigt in Richtung des Kernleiterendes B der jeweiligen Windungszahl und magnetischen Durchflutung nach. Eine andere Motorschaltung ist aufgrund der Tatsache möglich, daß eine induktiv in bekannter Weise funktionierende Spule mit kapazitivem Wickeldraht gewickelt werden kann, wobei bei gleicher Windungszahl die Kernleiter 1 über Anfang A und Ende B wie eine herkömmliche Wicklung angeschlossen wird. Eine an der Sammelkontaktierung 5 angeschlossene Hilfsphasenwicklung wird dann in der Reihe mit der Spulenkapazität geschaltet, die zwischen Kernleiter 1 und Metallisierung 3 besteht. Auch hier müssen die unterschiedlichen Spannungspegel der Windungen, oder Spulenabschnitte in der Ermittlung der Blindleistungsbeiträge berücksichtigt werden. Eine solche Anschlußanordnung ist in Fig. 11 dargestellt. Die Hauptwicklungen 4 und 4' werden mit kapazitivem Wickeldraht gewickelt und an das Netz angeschlossen. Die Hilfphasenwicklungen 20, 20' werden zwischen den Sammelkontaktierungen 5 der Hauptwicklungen 4 und 4' und dem Netz angeschlossen. Es ist aus der Schaltung zu entnehmen, daß sich zu dem induktiven Strom der Hauptwicklung 4 oder 4' Kapazitivströme der Hilfsphasenwicklungen 20, 20' addieren, die dessen Phasenlage beeinflussen. Bereits bei gleichen Windungszahlen der Wicklungen 4 und 20 ist dieser Einfluß allerdings gering, so daß brauchbore Motoren entstehen. Durch die Erhöhung der Windungszahlen der Hilfsphasenwicklungen 20, 20' läßt sich dieser Einfluß noch reduzieren.

Es ist bei Bedarf auch möglich, sowohl die Hauptwicklungen 4, 4' wie die Hilfsphasenwicklungen mit kapazitivem Wickeldraht auszuführen, sodaß eine Kombination der Schaltungen nach Fig. 10 und 11 entsteht. Schaltungen dieser Art sind auch für die Blindleistungskompensation leicht durchführbar und vorteilhaft. Wikkelt man insgesamt oder teilweise die Vorschaltinduktivität 4 (Fig. 12) einer Leuchtstofflampe 21 mit kapazitivem Wickeldraht, so entsteht wie bereits beschrieben eine entlang der Wicklung verteilte Kapazität. Die Sammelkontaktierung 5 der Metallisierung 3 wird ans Netz angeschlossen, wo die Leuchtstoffröhre 21 bereits angeschlossen ist. Diese Schaltung bringt außer der Blindleistungskompensation auch eine Unterdrückung der von der Leuchtstoffröhre erzeugten Netzstörungen. Die verteilte Kapazität der energiespeichernden Spule 4 ist hier parallel zur Leuchtstoffröhre, bzw. zum Netzanschluß angeschlossen.

Mit kleineren Kapazitätswerten bei höherer Spannung kommen Vorschaltinduktivitäten aus, deren Wicklungskapazität in der Reihe mit der Leuchtstofflampe geschaltet ist. Wie in Fig. 13 dargestellt wird an dem einen Netzleiter der Anfang A einer kapazitiv speichernden Spule angeschlossen, wobei das Ende H des Kernleiters 1 frei ist. Diese Wicklung befindet sich innerhalb eines üblichen, mit Luftspalten versehenen Blechpakets. Eine Leuchtstofflampe 21 ist zwischen der Sammelkontaktierung 5 und dem anderen Netzleiter angeschlossen. Durch die Reihenschaltung der Kapazität bedingt eilt der Strom der Spannung voraus, sodaß ein kapazitiver Blindstrom entsteht. Um diesen auszugleichen, kann, wie von herkömmlichen Duoschaltungen bekannt, parallel zum ersten eine zweite mit herkömmlichen induktivem Vorschaltgerät versehene Leuchte 21' angeschlossen werden.

Bei Transformatoren, Drosseln und anderen ans Netz angeschlossenen Induktivitäten ist es leicht möglich, eine Wicklung in zwei Abschnitte zu unterteilen und diese mit kapazitivem Wickeldraht auszuführen. Dies ergibt zwei Sammelkontaktierungen 5, 5' der Metallisierung 3, die, wie in Fig. 14 abgebildet, jeweils mit dem Anfang der ans Netz gekoppelten benachbarten Wicklung verbunden sind. Insbesondere bei unter Teillast arbeitenden Transformatoren führt dies zu einer Verringerung de verursachten induktiven Blindleistung. Besonders bei Kleintransformatoren kann man eine offene kapazitive Wicklung nach Fig. 15 einsetzen. Der mit kapazitivem Wickeldraht gewickelte Transformator weist das Verhalten eines in der Reihe mit einem Kondensator geschalteten Transformators auf und arbeitet normalerweise über erzwungene Schwingungen im Sättigungsbereich. Ein Kurzschluß in der in herkömmlicher Weise ausgeführten Sekundärwicklung führt zur Abnahme des Primärstromes und verhindert dadurch eine gefährliche Überhitzung. Darüber hinaus ergibt sich durch das Resonanzverhalten eine stabilisierende Wirkung auf die Sekundärspannung.

Es gibt Netzspannungsanwendungsfälle, wo der Miniaturisierung mancher Komponente (Transformatoren, Relais, Synchronmotoren, u.s.w.) durch die Abmessungen der Spulen Grenzen gesetzt sind. Bei kleineren Eisenquerschnitten verkleinern sich die Windungsspannungen; deswegen muß die Windungszahl wachsen. Die technisch erreichbare unterste Durchmessergrenze für Wickeldrähte liegt bei 0,01 mm, die wirtschaftlich noch vertretbare oft bei 0,05 mm φ. Um die Spule klein zu halten muß daher die Windungszahl in Grenzen gehalten werden, was entweder der Netzanschluß verbietet oder größere Eisenquerschnitte (größere Abmessungen) voraussetzt. Bei kleinen Bauteilen werden oft deswegen zusätzlich Vorschaltwiderstände oder Kondensatoren angewandt. Um dies zu vermeiden kann man direkt offene, mit kapazitivem Wikkeldraht ausgeführt Wicklungen nach Fig. 15 einsetzen. Die erforderliche Ampere-Windungszwhl wird dabei bei etwas höherem Strom kapazitiven Ursprungs mit kleineren Windungszahlen erreicht, ohne zusätzliche Bauteile zu benötigen. Die Vorteile der unter Wechselstromanwendungen beschriebenen Fälle sind durch den Ersatz von Kondensatoren oder durch zusätzliche Miniaturisierung eindeutig.

Erhebliche Fortschritte können mit Hilfe kapazitiv speichernder Wicklungen auch in der Wechselstrommagnettechnik (bei Magnetantrieben, Relais, Schützen, Magnetventilen u.s.w.) durch spezielle Schaltungen, die ein Wechselfeld und dadurch Wirbelstromverluste vermeiden, erreicht werden. Ein nach Fig. 16 mit Hilfe zweier Dioden in negative und positive Halbwellen zerlegger Wechselstrom produziert im Anschluß an eine kapazitive Wicklung erfindungsgemäßer Art ein Magnetfeld gleichbleibender Polarität und geringer Pulsation. Eine kapazitiv speichernde Wicklung 4 ist über die Sammelkontaktierung 5 an einen Netzleiter angeschlossen. Der Kernleiter 1 ist mit dem Anfang A an einer positiv gepolten Diode 18, mit dem Ende B an einer negativ gepolten Diode 18' angeschlossen. Diese Dioden können direkt oder über einen Widerstand 17 bzw einen Schalter 8 an den anderen Netzleiter angeschlossen werden. Sobald der Schalter 8 geöffnet wird, lädt sich die Wicklung positiv über den Widerstand 17 und die Diode 18 auf. Durch die Schließung des Schalters 8 und das Aufkommen einer negativen Halbwelle wird die Wicklung stoßartig entladen und dann negativ über die Diode 18' wieder aufgeladen, sodaß ein starker Strom entlang dem Kernleiter 1 von A nach B fließt. Einer darauffolgenden positiven Halbwelle gelingtes wegen des Widerstandes 17 nur teilweise, die Ladung der Wicklung durch einen in der gleichen Richtung fließenden Strom umzupolen, sodaß die nächste negative Halbwelle einen geringeren Strom bewirkt. Es ist sichergestellt, daß bei der Schließung des Schalters 8 ein Stromstoß entsteht, dessen Energieinhalt vom Wert des Widerstandes 17 unabhängig ist. Der später fließende Strom besteht aus unsymmetrischen Halbwellen und ist vom Wert des Widerstandes 17 abhängig. Es ist ersichtlich, daß durch den Kernleiter 1 der Strom stets in der gleichen Richtung A B fließt und sogar zwischen zwei Halbwellen durch die Freilaufwirkung der Dioden 18 und 18' aufrecht erhalten wird. Das Vibrieren eines Magnetankers ist dadurch verhindert, und es können einfachere nichtlamellierte Magnetkreisteile eingesetzt werden. Der Stoßstrom bei der Schließung des Schalters 8 bewirkt einen wirkungsvolleren Anzug eines Magnetankers, der von dem nachher fließenden Strom in bekannter Weise lediglich in Stellung gehalten werden muß. Der Stromverbrauch wird dadurch verringert. Wo eine solche Wirkung unerwünscht ist, können der Widerstand 17, bzw der Schalter 8 überbrückt werden, sodaß Anfangs- bzw. Dauerstrom gleich sind.

Eine besonders vorteilhafte Schaltungsanordnung für Magnetantriebe mit permanentmagnetisierbarem Kern (bistabile Magnetantriebe), wie z.B. in Fig. 9b abgebildet, ist in Fig. 17 dargestellt. Eine Wechselstromquelle wird zwischen der Sammelkontaktierung 5 und einem Umschalter 13 angeschlossen. Über den Umschalter 13 kann die Wicklung 4 durch den Kernleiteranfang A positiv über eine Diode 18 oder negativ über die andere Diode 18' (und ggf. einen Strombegrenzungswiderstand 17) aufgeladen werden. Die Umladung (Umpolung) über dem Umschalter 13 hat gegenüber einer einfachen Aufladung oder Entladung eine zweifache Wirkung. Aus der Schaltung sieht man, daß die Stromlaufrichtung sich beim Umschalten ändert, sodaß eine Aufmagnetisierung—Entmagnetisierung, bzw. Ummagnetisierung eines Magnetkernes stattfinden kann.

Aufgrund der kapazitiven Eigenschaffen der anfangs beschriebenen Wickeldrähte sind auch verschiedene andere Wicklungen mit solchen Wickeldrähten nach Fig. 1, 4, 5 ausgeführt dazu imstande, Energie zu speichern und dadurch Spannungsspitzen und Transienten zu unterdrükken. Abhängig vom Einsatzfall kann man dadurch Kondensatoren oder Entstörbausteine einsparen.

Eine Anwendung kapazitiv-induktiver Wicklungen kann bei Zeitrelais gefunden werden. Eine Möglichkeit besteht darin, die Kapazität der Wicklung als Kondensator eines R-C Zeitgliedes zu benutzen. Die nach Ablauf einer über den Ladestrom bestimmten Zeitspanne in der Wicklung kapazitiv gespeicherte Energie kann bei der Überschreitung eines Spannungspegels durch den Kernleiter AB entladen werden und dadurch den Relais betätigen.

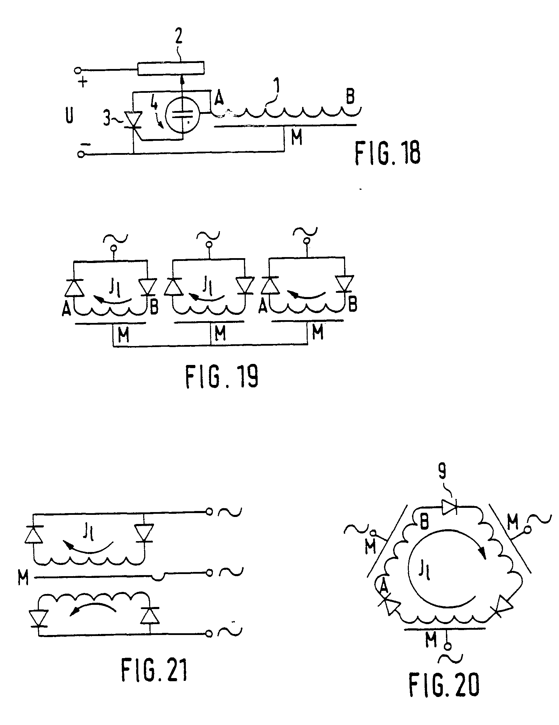

Nach Fig. 18 z.B. lädt sich die mit kapazitivem Wickeldraht ausgeführte Wicklung eines bistabilen Relais von einer Spannungsquelle U über den hochohmigen, Zeitkonstante steuernden variablen Widerstand. Dafür ist der Kernleiter[1] durch den Anfang A in der Reihe mit dem Widerstand 2 an den Pluspol der Spannungsquelle U verbunden, wobei die Sammelkontaktierung M der Metallisierung am Minuspol anliegt. Die Ladung der Wicklung kann sich zwischen den o.g. Punkten A und M, z.B. über einen Thyristor 3 entladen, was zum Ansprechen des Relais führt. Die Entladung erfolgt bei einem bestimmten vorgegebenen Spannungspegel, wofür die Zündung des Thyristors von einem spannungsabhäangig leitenden Triggerbaustein 4 bewirkt wird. Genausogut kann die Ladung der Wicklungskapazität indirekt (unter Inanspruchnahme einer anderen Stromquelle) das Ansprechen des Relais steuern. Es ist auch möglich, gleichzeitig mit der kapazitiven Aufladung oder Entladung der Wicklung diese auch induktiv zu beanspruchen, z.B. mit einem Polarisationsstrom (Haltestrom des Relais). Ein anderer Lösungsweg um eine Zeitrelaisfunktion zu erreichen ist es, die induktiv-kapazitive Spule des Relais durch geeignete elektronische Schaltungen mit der eigenen Schwingfrequenz schwingen zu lassen und mittels bekannter elektronischer Lösungen eine Auslösefunktion nach einer bestimmten Schwingungszahl zu bewirken. Dabei kann von der Möglichkeit Gebrauch gemacht werden, auch die Eigenschwingfrequenz der Spule zum Zwecke der Verzögerungsbestimmung zu ändern.

Die Eigenschaft einer induktiv-kapazitiven Wicklung, bei einer vorgegebenen Schaltungsart eine bestimmte Eigenschwingfrequenz aufzuweisen, kann bei Magnetantrieben, -Ventilen und -relais zu: Rückmelde- oder Überwachungsfunktionen eingesetzt werden. Den zwei oder mehreren Stellungen des Arbeitsgliedes einer Magnetvorrichtung entsprechen bestimmte Eigenschwingfrequenzen, weil in der Regel jeder Stellung ein Luftspalt bzw. eine Reluktanz des Magnetkreises entspricht. Diese Frequenzen können mit einem überlagerten Strom, der schwach genug ist, um die Funktionsstellung nicht zu beeinflussen, abgefragt werden, was ohne zusätzlichen Aufwand einen Hinweis auf die Stellung des Arbeitsgliedes ermöglicht. Diese Möglichkeit ist besonders bei Magnetventilen wichtig, wo die Stellung der sich in einer Flüssigkeit bewegenden Arbeitsgliedes sonst schwer feststellbar ist. Es besteht auch die Möglichkeit, die Temperatur der Wicklung, die u.U. der Temperatur des Mediums wo diese eintaucht entspricht, zu bestimmen. Die Eigenschwingfrequenz der Wicklung ist als Folge der temperaturabhängigen Änderung der Dielektrizitätskonstante der Isolation sowie mancher induktiver Parameter für eine bestimmte Arbeitsstellung auch temperaturabhängig. Die Messung dieser Frequenz gestattet es in vielen Fällen, die Spulentemperatur zu bestimmen. Es wurde gezeigt, daß eine induktiv-kapazitive Wicklung ausreichend Energie speichern kann, um die Betätigung eines Magnetantriebes zu bewirken. Angesichts der geringen Stromaufnahme moderner elektronischer Schaltungen ist es möglich, z.B. mit einem Teil dieser Energie für begrenzte Zeit Steuerschaltungen zu betreiben.

Wie bereits oben beschrieben ist es möglich, mit Hilfe einer Diodenschaltung über kapazitive, durch Wechselstrom hervorgerufene Ströme, im Kernleiter gleichfließende, induktiv wirksame Ströme zu erzeugen. Mit Hilfe ähnlicher Technik ist es auch möglich, mehrere durch Wechselströme oder Drehstrom hervorgerufene, gleichgerichtete Kernleiterströme bzw. Magnetfelder zu erzeugen, die sich überlagern lassen, soaß ein resultierendes, gleichgerichtetes Magnetfeld der Summe dieser Magnetfelder entspricht. Mit solchen Anordnungen können z.B. Drehstrommagnete mit einem gemeinsamen, nicht lamellierten Kern hergestellt werden, die bis auf die Wicklung mit Gleichstrommagneten identisch, also einfach sind. Durch entsprechende Auslegung der magnetisch-mechanischen Parameter (Luftspalten, Federkräfte, u.s.w.) ist es möglich, im Falle von Drehstrommagneten dieser Art, daß bei dem Ausfall nur einer Phase die Anzugskraft des beweglichen Ankers soweit abnimmt, daß dieser zurückfällt und so z.B. Kontakte betätigt. Als Anwendung kommen v.a. Schütze für Drehstrommotoren, die beim Phasenausfall den Motor ausschalten, in Frage. Ein Schaltbeispiel dieser Art besteht nach Fig. 19 aus mehreren (hier 3) Wicklungen AB deren Windungsmetallisierungen M miteinander verbunden sind. Der Anfang A bzw. das Ende B des jeweiligen Kernleiters der Wicklungen, die identisch (gemeinsam gewickelt), oder nicht identisch sein können, werden an der Anode bzw. Kathode zweier Dioden angeschlossen. Die freien Anschlüsse der Dioden werden gemeinsam an Wechselstrom angeschlossen, sodaß die Fließrichtung des induktiv wirksamen Kernleiterstromes $I_1$ gleichbleibend ist. Eine ähnliche einfache Schaltung, die jedoch in mehreren voneinander isolierten Spulenabschnitten untergebracht werden muß, ist in Fig. 20 dargestellt. Zwei oder mehrere (hier 3) induktiv-kapazitive identische oder unterschiedliche Wicklungen werden in verschiedenen Wickelräumen untergebracht, sodaß die jeweiligen Sammelkontaktierungen M der Windungsmetallisierung an verschiedenen Wechselstrom führenden Leitern (z.B. im Falle eines Drehstromes an den drei Basenleitern) angeschlossen werden. Die jeweiligen Kernleiteranfänge A bzw. -enden B werden über Dioden 9 zu einem Stromkreis geschlossen, indem der induktiv wirksame Strom $I_1$ kreisförmig in der von den Dioden vorgegebenen Richtung fließen kann. Für diese Schaltung und der Schaltung nach Fig. 19 führt der Ausfall einer Phase im Falle eines symmetrischen Drehstromes zu einer Verminderung um ca ein Drittel des gesamzen magnetischen Feldes.

Eine unsymmetrische, besonders einfache Schaltung, die beim Ausfall einer Phase im Falle eines symmetrischen Drehstromes zu einer Magnetfeldverringerung um etwa 50% führt, ist in Fig. 21 dargestellt. Eine induktiv-kapazitive Wicklung wird auf einfachste Weise mit 2 kapazitiven Wickeldrähten bifilar ausgeführt, sodaß die Sammelkontaktierung M der Windungsmetallisierung zu beiden Kernleitern gehört und an eine Phase angeschlossen wird. Die zwei übrigen Phasen werden wie unter Fig. 19 beschrieben über jeweils zwei Dioden an den Kernleiteranfängen bzw. -enden der Wicklungen angeschlossen. Der Anschluß erfolgt in der Art, daß die Magnetfelder der beiden Kernleiter sich addieren. Für die Schaltungen nach Fig. 19 und Fig. 21 beträgt der Effektivwert des induktiven (durch den Kernleiter fließenden) Gleichstromes $I_1$ die Hälfte der durch die jeweiligen Phase fließenden kapazitiven Wechselstromes. Dieses entspricht der Kapazität, Frequenz und Spannung, die zwischen den jeweiligen, an der Kapazitätsbildung beteiligten Leitern, feststellbar sind.

## Patentansprüche

1. Elektrisches Bauelement mit induktiven und kapazitiven Eigenschaften, das einen in Form einer Spule mit mindestens einer Wicklung aus mehreren Windungen gewickelten Wickeldraht aufweist, der einen Kernleiter (1), eine diesen umgebende, als Dielektrikum ausgebildete Isolierschicht (2) und einen auf der Isolierschicht (2) aufgebrachten Außenleiter (3) aufweist, dadurch gekennzeichnet, daß der die Isolierschicht (2) mindestens teilweise umgebende Außenleiter (3) als dünne Metallisierungsschicht mit Hilfe bekannter physikalischer oder chemischer Verfahren, wie Aufdampfen, Kathodenzerstäubung oder chemische Abscheidung, ausgebildet ist, daß die axiale Leitfähigkeit des Kernleiters (1) wesentlich höher ist als die Leitfähigkeit des Außenleiters (3) und daß mit dem Kernleiter (1) und dem Außenleiter (3) elektrische Anschlüsse für eine elektrische Schaltung verbunden sind, wobei der Außenleiter (3) jeder Windung mit dem Außenleiter der jeweils benachbarten Windung zur Bildung einer gemeinsamen kapazitiven Sammelelektrode als der eine Anschluß elektrisch verbunden ist.

2. Bauelement nach Anspruch 1, dadurch gekennzeichnet, daß der Außenleiter (3) bei jeder Windung unterbrochen ist.

3. Bauelement nach Anspruch 2, dadurch gekennzeichnet, daß der Außenleiter (3) in jeder Windung in jeweils der gleichen Winkellage unterbrochen ist.

4. Bauelement nach Anspruch 1, dadurch gekennzeichnet, daß die Sammelkontaktierung (5) aus mindestens einer Metallfolie zwischen zwei Windungen oder aus einem metallischen Streifen (5) gebildet ist.

5. Bauelement nach Anspruch 1, wobei die Windungen auf einem Spulenkörper aufgebracht sind, dadurch gekennzeichnet, daß die Sammelkontaktierung (5) aus einer metallischen Schicht des Spulenkörpers gebildet ist.

6. Elektrisches Bauelement mit induktiven und kapazitiven Eigenschaften aus zwei voneinander elektrisch isolierten, spulenförmig in Windungen und Wicklungen aufgewickelten Leitern, die zu einem Wickeldraht aus einem Kernleiter (1), einem diesen umgebenden elektrisch isolierenden Dielektrikum (2) und einem die Isolation zumindest teilweise umgebenden Außenleiter (3) zusammengefaßt sind, dadurch gekennzeichnet, daß die Isolierschicht (2) als anodische Formierschicht gebildet ist, und daß der Außenleiter (3) eine elektrisch leitfähige kapazitive Sammelelektrode (5) aus einem Kondensatorelektrolyten aufweist, der einen porösen, um den Kernleiter (1) samt Isolation (2) gewundenen Abstandshalter tränkt, wobei dessen elektrische Leitfähigkeit so gering ist, daß die Kurzschlußwindungswirkung schwach ist, und daß die aus Aluminium gefertigte Sammelkontaktierung (5) in der Art der Kathode eines Elektrolytkondensators an diesem Abstandshalter anliegt.

7. Bauelement nach Anspruch 6, dadurch gekennzeichnet, daß das Dielektrikum aus Aluminiumoxid gebildet ist.

8. Elektrisches Bauelement nach Anspruch 1, dadurch gekennzeichnet, daß der Wickeldraht aus zwei nebeneinanderliegenden Flachdrähten (11, 11') besteht, die von einer gleichmäßigen Isolation umgeben sind, und daß dieser bandförmige Verbund auf der einen Breitseite mit der Metallisierungsschicht (3") versehen ist.

9. Elektrisches Bauelement nach einem der Ansprüche 1 bis 8, dadurch gekennzeichnet, daß der Wickeldraht zwei unabhängig voneinander schaltbare Kapazitäten besitzt, daß der Wickeldraht aus einem Kernleiter (1), einer Isolation (2), einem Mantelleiter (9) und einer äußeren Isolierschicht (10) besteht, wobei auf der äußeren Isolierschicht eine dünne Metallisierung (3') aufgetragen ist, die mit dem Mantelleiter (9) eine zusätzliche Kapazität bildet.

10. Bauelement nach einem der Ansprüche 1 bis 9, dadurch gekennzeichnet, daß das Bauelement einen Magnetkern (7) enthält.

11. Bauelement nach Anspruch 10, dadurch gekennzeichnet, daß beim Einsatz des Bauelements als Schwingkreis dessen Eigenschwingfrequenz stufenweise durch Schaltungen der Leiter des Wickeldrahtes (1, 3, 3', 3", 9, 11, 11') untereinander bzw. auch stufenlos über variable Widerständen zwischen den Leitern veränderbar ist.

12. Bauelement nach einem der vorhergehenden Ansprüche, dadurch gekennzeichnet, daß die Leiter (1, 9, 11, 11') des Wickeldrahts (WD) beidseitig an einer Stromquelle angeschlossen sind.

13. Bauelement nach einem der Ansprüche 1 bis 12, dadurch gekennzeichnet, daß die Wicklung mehrphasig ausgebildet ist.

14. Bauelement nach einem der Ansprüche 1 bis 13, dadurch gekennzeichnet, daß an den elektrischen Anschlüssen eine Wechselstromquelle (Mp, Ph) angeschlossen ist.

15. Bauelement nach einem der Ansprüche 1 bis 14, dadurch gekennzeichnet, daß an den elektrischen Anschlüssen eine Stromquelle über einen Widerstand (17, 17', 17") angeschlossen ist.

16. Bauelement nach einem der Ansprüche 1 bis 15, dadurch gekennzeichnet, daß an den elektrischen Anschlüssen eine Stromquelle über mindestens eine Diode (18, 18') angeschlossen ist.

17. Bauelement nach Anspruch 14, dadurch gekennzeichnet, daß an den elektrischen Anschlüssen eine Stromquelle (Mp, Ph) über eine Leuchtstoffröhre (21) angeschlossen ist.

18. Bauelement nach einem der Ansprüche 1 bis 10, dadurch gekennzeichnet, daß das Bauelement die Wicklung eines Relais, gegebenenfalls mit Arbeitsanker (14) bildet.

19. Bauelement nach einem der Ansprüche 1 bis 18, dadurch gekennzeichnet, daß mehrere Wicklungen vorgesehen sind und daß diese Wicklungen Haupt- bzw. Hilfsphasenwicklungen eines Hilfsphasenmotors sind.

20. Bauelement nach einem der Ansprüche 1 bis 18, dadurch gekennzeichnet, daß mehrere Wicklungen vorgesehen sind und daß diese antiparallel zueinander an der Spannungsquelle (Mp, Ph) angeschlossen sind.

21. Bauelement nach einem der Ansprüche 1 bis 18, dadurch gekennzeichnet, daß mehrere Wicklungen vorgesehen sind, daß die Kernleiter (1) dieser Wicklungen miteinander über Dioden verbunden sind und daß mehrere Stromquellen mit den jeweiligen Außenleitern (3) verbunden sind.

22. Bauelement nach einem der vorhergehenden Ansprüche, dadurch gekennzeichnet, daß es als induktive Wicklung zur Spannungsspitzenunterdrückung einsetzbar ist.

23. Bauelement nach einem der Ansprüche 1 bis 18, dadurch gekennzeichnet, daß die Wicklung des Bauelements an eine Wechselstromquelle angeschlossen ist, wobei ein Leiter der Wechselstromquelle über einen Widerstand (17) und eine positiv gepolte Diode (18) an den Anfang (A) des Kernleiters (1) und über einen Steuerschalter (8) und eine negativ gepolte Diode (18') an das Ende (E) des Kernleiters (1) angeschlossen ist und der andere Leiter des Wechselstromanschlusses an einer Sammelkontaktierung (5) anliegt, und daß der Widerstand (17) oder der Schalter (8) überbrückbar sind.

24. Bauelement nach einem der Ansprüche 1 bis 18, dadurch gekennzeichnet, daß an einen Anschluß (A oder B) des Kernleiters (1) zwei entgegengepolte Dioden (18, 18') angeschlossen sind, die wechselweise durch einen Umschalter (13) mit einer Wechselstromquelle verbindbar sind, daß eine dieser Dioden (18, 18') in Reihe mit einem strombegrenzenden Widerstand (17) liegt, und daß der andere Anschluß der Wechselstromquelle an einer mit dem Kernleiter (1) kapazitiv gekoppelten Elektrode (9) des Wickeldrahtes anliegt.

25. Bauelement nach einem der Ansprüche 1 bis 18, dadurch gekennzeichnet, daß die Wicklung des Bauelements aus zwei oder mehreren (n) Adern besteht, deren Kernleiter mit ihrem Anfang (A) an der Anode einer Diode bzw. mit ihrem Ende (B) mit der Kathode einer anderen Diode verbunden sind, daß die freien Anschlüsse dieser Dioden zusammen an einen Stromphasenleiter angeschlossen sind, und daß die mit den Kernleitern kapazitiv gekoppelten Außenleiter (3) miteinander in elektrischem Kontakt stehen.

26. Bauelement nach einem der Ansprüche 1 bis 18, dadurch gekennzeichnet, daß die Wicklung aus zwei oder mehreren (n) untereinander isolierten Wicklungsabschnitten besteht, denen jeweils Sammelkontaktierungen (M) der Außenleiter (3) entsprechen, die an mehreren (n) Phasen einer Wechsel- oder Drehstromquelle angeschlossen sind, und daß die jeweiligen Kernleiter über mehrere (n) zwischengeschaltete Gleichrichterdioden miteinander zu einem Kreis verbunden sind.

27. Bauelement nach einem der Ansprüche 1 bis 18, dadurch gekennzeichnet, daß. bei einem Anschluß des Bauelementes an eine dreiphasige Stromquelle die Wicklung eine gemeinsame Sam-

melkontaktierung (M) der Außenleiter (3) aufweist, die an einen Phasenleiter der Stromquelle angeschlossen ist, und daß jeder der anderen zwei Phasenleiter an der Anode und Kathode zweier Dioden angeschlossen ist, und daß die freie Kathode bzw. Anode dieser Dioden an dem Anfang (A) bzw. Ende (E) des Kernleiters (1) des Wickeldrahtes angeschlossen sind.

28. Bauelement nach einem der Ansprüche 1 bis 18, eingesetzt als Spule für bistabile Magnetantriebe, dadurch gekennzeichnet, daß zur Bildung in der Polarität entgegengesetzter kurzzeitiger Magnetfelder über die gleichen Anschlüsse zweier nur eine Kapazität bildender Leiter (1, 9, 11, und 3, 3′, 9, 11′) mit Hilfe eines Umschalters (13) diese Kapazität aufladbar und entladbar ist, wobei es nach einer Aufladung über eine induktivitätsneutrale Mitenanzapfung (M) wechselweise mit Hilfe zweier Schalter (13 und 8) über dem Anfang (AC) oder Ende (BD) eines gleichen Leiters (1, 9, 11, 11′) entladbar ist.

**Revendications**

1. Composant électrique pourvu de propriétés inductives et capacitives qui présente un fil de bobinage enroulé en forme de bobine avec au moins un enroulement comportant plusieurs spires, lequel présente un conducteur central (1), une couche isolante (2) qui entoure celui-ci et constitue un diélectrique, et un conducteur extérieur (3) appliqué sur la couche isolante (2), caractérisé en ce que le conducteur extérieur (3) entourant au moins en partie la couche isolante (2) est constitué par une mince couche de métallisation appliquée à l'aide de procédés physiques ou chimiques connus, tels que la vaporisation, la désintégration cathodique ou la séparation chimique, en ce que la conductivité axiale du conducteur central (1) est très supérieure à la conductivité du conducteur extérieur (3) et en ce que les connexions électriques destinées à un circuit électrique sont reliées au conducteur central (1) et au conducteur extérieur (3), tandis que le conducteur extérieur (3) de chaque spire est relié électriquement au conducteur extérieur de la spire respectivement voisine afin de constituer une électrode collectrice capacitive commune, en tant que l'une des connexions.

2. Composant selon la revendication 1, caractérisé en ce que le conducteur extérieur (3) est interrompu à chaque spire.

3. Composant selon la revendication 2, caractérisé en ce que le conducteur extérieur (3) est interrompu dans chaque spire suivant une même position angulaire respective.

4. Composant selon la revendication 1, caractérisé en ce que la réalisation collectrice des contacts (5) est constituée par au moins une feuille de métal entre deux spires ou par une bande de métal (5).

5. Composant selon la revendication 1, dont les spires sont montées sur un corps de bobine, caractérisé en ce que la réalisation collectrice des contacts (5) constituée par une couche métallique du corps de bobine.

6. Composant électrique pourvu de propriétés inductives et capacitives, comportant deux conducteurs isolés électriquement entre eux, qui sont enroulés en spires et en enroulements en forme de bobine qui sont réunis en un fil de bobinage comprenant un conducteur central (1), un diélectrique (2) isolant électriquement celui-ci et un conducteur extérieur (3) entourant au moins en partie celui-ci, caractérisé en ce que la couche isolante (2) constitue une couche de formation anodique et en ce que le conducteur extérieur (3) présente une électrode collectrice (5) capacitive conductrice du courant électrique constitué par un électrolyte de condensateur, qui imbide un écarteur poreux enroulé autour du conducteur central (1), y compris l'isolation (2) et dont la conductivité est suffisamment réduite pour que l'effet de spires de court-circuit soit faible et en ce que l'élément collecteur de contact (5), réalisé en aluminium, s'appuie sur cet écarteur, à la manière de la cathode d'un condensateur électrochimique.

7. Composant selon la revendication 6, caractérisé en ce que le diélectrique est constitué par de l'oxyde d'aluminium.

8. Composant électrique selon la revendication 2, caractérisé en ce que le fil de bobinage est constitué par deux fils plats (11, 11′) juxtaposés qui sont entourés par une isolation homogène et en ce que cet élément composite est pourvu sur son côté large de la couche de métallisation (3″).

9. Composant électrique selon l'une des revendications 1 à 8, caractérisé en ce que le fil de bobinage possède deux capacités commutables indépendamment, en ce que le fil de bobinage est constitué par un conducteur central (1), une isolation (2), un conducteur d'enveloppe (9) et une couche isolante extérieure (10), sur laquelle couche isolante extérieure est appliquée une mince métallisation (3′), qui constitue avec le conducteur d'enveloppe (9) une capacité supplémentaire.

10. Composant selon l'une des revendications 1 à 9, caractérisé en ce que le composant comporte un noyau magnétique (7).

11. Composant selon la revendication 10, caractérisé en ce que, lorsque l'on utilise le composant comme circuit oscillant, sa fréquence d'oscillation propre est modifiable par degrés de couplages de conducteurs du fil de bobinage (1, 3, 3′, 3″, 9, 11, 11′) entre eux, ou bien sans gradations au moyen de résistances variables entre les conducteurs.

12. Composant selon l'une des revendications précédentes, caractérisé en ce que les conducteurs (1, 9, 11, 11′) du fil de bobinage (WD) sont reliés des deux côtés à une source de courant.

13. Composant selon l'une des revendications précédentes, caractérisé en ce que l'enroulement comporte plusieurs phases.

14. Composant selon l'une des revendications 1 à 13, caractérisé en ce qu'une source de courant électrique alternatif (Mp, Ph) est reliée aux connexions électriques.

15. Composant selon l'une des revendications 1 à 14, caractérisé en ce qu'une source de courant est reliée aux connexions électriques par l'intermédiaire d'une résistance (17, 17', 17").

16. Composant selon l'une des revendications 1 à 15, caractérisé en ce qu'une source de courant est reliée aux connexions électriques par au moins une diode (18, 18').

17. Composant selon la revendication 14, caractérisé en ce qu'une source de courant (Mp, Ph) est reliée aux connexions électriques par l'intermédiaire d'un tube fluorescent (21).

18. Composant selon l'une des revendications 1 à 10, caractérisé en ce que le composant constitue l'enroulement d'un relais, le cas échéant sur une palette de travail (14).

19. Composant selon l'une des revendications 1 à 18, caractérisé en ce qu'il est prévu plusieurs enroulements et en ce que ces enroulements sont des enroulements principaux ou de phases auxiliaires d'un moteur à phases auxiliaires.

20. Composant selon l'une des revendications 1 à 18, caractérisé en ce qu'il est prévu plusieurs enroulements et en ce que ceux-ci sont reliés à la source de tension (Mp, Ph) de manière antiparallèle entre eux.

21. Composant selon l'une des revendications 1 à 18, caractérisé en ce qu'il est prévu plusieurs enroulements, en ce que les conducteurs centraux (1) de ces enroulements sont reliés entre eux par des diodes et en ce que plusieurs sources de courant sont reliées aux conducteurs extérieurs (3) respectifs.

22. Composant selon l'une des revendications précédentes, caractérisé en ce qu'il peut être utilisé comme enroulement inductif pour la suppression des pointes de tension.

23. Composant selon l'une des revendications 1 à 18, caractérisé en ce que l'enroulement du composant est relié à une source de courant alternative, dont un conducteur de ladite source de courant est relié par l'intermédiaire d'une résistance (17) et d'une diode (18) polarisée positivement au début (A) du conducteur central (1) et par l'intermédiaire d'un interrupteur de manoeuvre (8) et d'une diode (18') polarisée négativement à la fin (E) du conducteur central (1) et en ce que l'autre conducteur de la connexion de courant alternatif s'appuie sur un élément collecteur de mise en courant (5) et en ce que la résistance (17) ou l'interrupteur (18) peut être court-circuité.

24. Composant selon l'une des revendications 1 à 18, caractérisé en ce que deux diodes (18, 18') de polarité opposée sont reliées à une connexion (A ou B) du conducteur central (1) et peuvent être reliées tour à tour au moyen d'un inverseur (13) à une source de courant alternatif, en ce que l'une de ces diodes (18, 18') est montée en série avec une résistance (17) limitant le courant et en ce que l'autre connexion de la source de courant alternatif est reliée à une électrode (9) du fil de bobinage couplée capacitivement avec le conducteur central.

25. Composant selon l'une des revendications 1 à 18, caractérisé en ce que l'enroulement du composant est composé de deux brins ou plus (4), dont le conducteur central est relié par un début (a) à l'anode d'une diode et par sa fin (B) à la cathode d'une autre diode, en ce que les connexions libres et ces diodes sont reliéss ensemble à un conducteur de phases de courant et en ce que les conducteurs extérieurs (2) couplés capacitivement avec les conducteurs centraux sont en contact électrique entre eux.

26. Composant selon l'une des revendications 1 à 18, caractérisé en ce que l'enroulement comporte deux parties d'enroulement ou plus (n) isolées entre elles auxquelles correspondent respectivement des éléments collecteurs de mise en contact (M) des conducteurs extérieurs (3), qui sont reliés à plusieurs (n) phases d'une source de courant alternatif ou triphasé et en ce que les conducteurs centraux respectifs sont reliés ensemble en un circuit au moyen de plusieurs diodes redresseuses intercalées.

27. Composant selon l'une des revendications 1 à 18, caractérisé en ce que, lors de la connexion du composant à une source de courant triphasé, l'enroulement présente un élément collecteur de mise en contact (M) des conducteurs extérieurs (3) qui est relié à un conducteur de phases de la source de courant, en ce que chacun des deux autres conducteurs de phases est relié à l'anode et à la cathode de deux diodes et en ce que la cathode et l'anode libre de ces diodes sont reliées au début (A) et à la fin (E) du conducteur central (1) du fil de bobinage.

28. Composant selon l'une des revendications 1 à 18, utilisé comme bobine pour des entraînements magnétiques bistables, caractérisé en ce que, pour créer des champs magnétiques de courte durée et de polarité opposée au moyen des mêmes connexions de deux conducteurs (1, 9, 11, et 3, 3', 9, 11') ne constituant qu'une capacité, cette capacité peut être chargée ou déchargée à l'aide d'une prise médiane (M) neutre quant à l'inductivité, une décharge est possible à l'aide, tour à tour, de deux interrupteurs (13 et 18) par le début (AC) ou la fin (BD) d'un même conducteur (1, 9, 11, 11').

**Claims**

1. Electrical component with inductive and capacitive properties comprising a winding wire being wound in form of a coil with at least one winding consisting of several turns, said winding wire comprising a core conductor (1), an insulating layer (2) being formed as dielectric and surrounding the core conductor and an outer conductor (3) applied to the insulating layer (2), characterized in that the outer conductor (3) at least partly surrounding the insulating layer (2) is formed as thin metallization layer with the aid of known physical or chemical processes like evaporation coating, cathode sputtering or chemical deposition, that the axial conductivity of the core conductor (1) is substantially higher that the conductivity of the outer conductor (3) and that electrical contacts for an electric circuitry are connected to the core conductor (1) and the outer conductor (3), whereby the outer conductor (3) of every turn is electrically connected to the outer conductor of the respectively neighbouring turn to form a common capacitive collective electrode as one of said connections.

2. Component as defined in Claim 1, characterized in that the outer conductor (3) is interrupted at each turn.

3. Component as defined in Claim 2, characterized in that the outer conductor (3) is interrupted at each of the turns at the same angular position.

4. Component as defined in Claim 1, characterized in that the common contacting (5) is formed by at least one metal foil between two turns or by a metallic strip (5).

5. Component as defined in Claim 1, wherein the turns are applied to a coil body, characterized in that the common contacting (5) is formed by a metallic layer of the coil body.

6. Electrical component with inductive and capacitive properties made of two wound conductors mutually electrically insulated and in coil-like manner wound in windings and turns, combined into a winding wire out of a core conductor (1), an electrical insulating dielectric (2) surrounding the latter and an outer conductor (3) at least partly surrounding the insulation, characterized in that the insulating layer (2) is formed as anodic formation layer and that the outer conductor (3) comprises an electrically conducting capacitive common electrode (5) of a capacitor electrolyte, impregnating a porous spacer wound around the core conductor (1) as well as the insulation (2), wherein the electrical conductivity thereof is low to such an extend that the short circuit winding function is low, and that the common contacting (5) made from aluminium bears on said spacer in the manner of an electrolyte capacitor cathode.

7. Component as defined in Claim 6, characterized in that said dielectric is formed of aluminium oxide.

8. Component as defined in Clam 1, characterized in that the winding wire consists of two adjacent flat wires (11, 11') being surrounded by a uniform insulation, and that the band-like composite is provided with the metallization layer (3'') on the one broad side.

9. Electrical component as defined in one of Claims 1 to 8, characterized in that the winding wire has two capacitances switchable independently from one another, that the winding wire consists of a core conductor (1), an insulation (2), a shell conductor (9) and an outer insulating layer (10), a thin metallization (3') forming an additional capacitance together with the shell conductor being applied to the outer insulating layer.

10. Component as defined in one of Claims 1 to 9, characterized in that the component contains a magnetic core (7).

11. Component as defined in Claim 10, characterized in that, when the component is used as oscillator circuit, the natural frequency thereof is variable by circuit connections between the conductors of the winding wire (1, 3, 3', 3'', 9, 11, 11') or, respectively, also continuously by means of variable resistances between the conductors.

12. Component as defined in one of the preceding Claims, characterized in that the conductors (1, 9, 11, 11') of the winding wire (WD) on both sides are connected to a current source.

13. Component as defined in one of Claims 1 to 12, characterized in that the winding is made multi-phase.

14. Component as defined in one of Claims 1 to 13, characterized in that an AC source (Mp, Ph) is connected to the electrical contacts.

15. Component as defined in one of Claims 1 to 14, characterized in that a current source is connected to the electrical contacts via a resistor (17, 17', 17'').

16. Component as defined in one of Claims 1 to 15, characterized in that a current source is connected to the electrical contacts via at least one diode (18, 18').

17. Component as defined in Claim 14, characterized in that a current source (Mp, Ph) is connected to the electrical contacts via a fluorescent tube (21).

18. Component as defined in one of Claims 1 to 10, characterized in that the component forms the winding of a relay if required with work anchor (14).

19. Component as defined in one of Claims 1 to 18, characterized in that several windings are provided for and said windings are main or, resp., auxiliary phase windings of a motor with auxiliary phases.

20. Component as defined in one of Claims 1 to 18, characterized in that several windings are provided for and those are in mutually antiparallel manner connected to the voltage source (Mp, Ph).

21. Component as defined in one of Claims 1 to 18, characterized in that several windings are provided for, that the core conductors (1) of said windings are mutually connected via diodes and that several current sources are connected to the respective outer conductors (3).

22. Component as defined in one of the preceding Claims, characterized in that it is usable as inductive winding for suppressing voltage peaks.

23. Component as defined in one of Claims 1 to 18, characterized in that the winding of the component is connected to an AC source, wherein one conductor of the AC source is connected to the beginning (A) of the core conductor (1) via a resistor (17) and a positive polarity diode (18) and is connected to the end (E) of the core conductor (1) via a control switch (8) and a negative polarity diode (18') and the other conductor of the AC connection is applied to a common contacting (5), and that the resistor (17) or the switch (8) can be bridged.

24. Component as defined in one of Claims 1 to 18, characterized in that two opposite polarity diodes (18, 18') are connected to a contact (A or B) of the core conductor (1), said diodes being alternatingly connectable to an AC source by a change-over switch (13), and that one of said diodes (18, 18') is connected in series with a current-limiting resistor (17) and that the other terminal of the AC source is connected to an electrode (9) of the winding wire, capacitively connected to the core conductor (1).

25. Component as defined in one of Claims 1 to 18, characterized in that the winding of the component consists of two or more (n) wires the core conductors of which are connected to the anode of a diode with their beginning (A) and/or to the cathode of another diode with their end (B), respectively, that the free terminals of said diodes together are connected to a current phase conductor, and that the outer conductors (3) capacitively coupled with the core conductors are in mutual electrical contact.

26. Component as defined in one of Claims 1 to 18, characterized in that the winding consists of two or more (n) mutually insulated winding sections to which respectively correspond common contactings (M) of the outer conductors (3) which are connected to several (n) phases of an AC or three-phase current source, and that the respective core conductors are connected via several (n) intreposed rectifier diodes to form a circuit.

27. Component as defined in one of Claims 1 to 18, characterized in that, in case of a connection of the component to a three-phase current source, the winding comprises a common contacting (M) of the outer conductors (3), said contacting being connected to a phase conductor of the current source, and that each of the remaining two phase conductors is connected to the anode and cathode of two diodes, and that the free cathode or anode, respectively, of said diodes is connected to the beginning (A) or end (E), respectively, of said core conductor (1) of the winding wire.

28. Component as defined in one of Claims 1 to 18, used as coil for bistable magnetic drives, characterized in that, for the formation of short-period magnetic fields having opposite polarities, through the same contacts of two conductors (1, 9, 11 and 3, 3', 9, 11') forming only one capacitance said capacitance is chargeable and dischargeable with the aid of a switch-over switch (13), wherein after a charging operation through an inductance-neutral central tapping (M) alternatingly with the aid of two switches (13 and 8) the component can be discharged via the beginning (AC) or the end (BD) of a same conductor (1, 9, 11, 11').

WD

1
2
3

**FIG.1**

W1

3
2
4

A

l

J

B
1

Wn

5

WD

**FIG.2**

U ≃

8

7

3
6
6'

WD

1

4

**FIG.3**

3'
10
9
2
1

**FIG.4**

WD
11
11'
12

Cl
Cr
3"

**FIG.5**

FIG.6a

FIG.6b

FIG.7a

FIG.7b

FIG.7c

FIG.7d

FIG.7e

FIG.8a

FIG.8b

$U = n \cdot U_W$

FIG.8c

FIG.9a

FIG.9b

FIG.9c

FIG.9d

FIG.10

FIG.11

FIG.12

FIG.13

FIG.14

FIG.15

FIG.16

FIG.17

FIG.18

FIG.19

FIG.21

FIG.20